# EUROPÄISCHE PATENTSCHRIFT

(11) **EP 3 807 286 B1**
(45) Veröffentlichungstag und Bekanntmachung des Hinweises auf die Patenterteilung: **06.09.2023**
(21) Anmeldenummer: 19727661.1
(22) Anmeldetag: 29.05.2019
(51) Int. Cl.: C07F 7/18, C08G 77/28, B33Y 70/00

(54) **DEGRADIERBARE SILANE MIT THIO- UND AMINOGRUPPEN, DARAUS HERGESTELLTE KIESELSÄUREPOLYKONDENSATE UND HYBRIDPOLYMERE, DEREN VERWENDUNG SOWIE VERFAHREN ZUR HERSTELLUNG DER SILANE**
DEGRADABLE SILANE HAVING THIO AND AMINO GROUPS, SILICIC ACID POLYCONDENSATES AND HYBRID POLYMERS PRODUCED THEREFROM, USE THEREOF AND METHOD FOR PRODUCING THE SILANES
SILANES DÉGRADABLES À GROUPES THIO ET AMINO, POLYCONDENSATS D'ACIDES SILICIQUES ET POLYMÈRES HYBRIDES FABRIQUÉS À PARTIR DE CES DERNIERS, LEUR UTILISATION ET PROCÉDÉ DE FABRICATION DES SILANES

(30) Priorität: 15.06.2018 DE 102018114406
(43) Veröffentlichungstag der Anmeldung: 21.04.2021
(73) Patentinhaber: Fraunhofer-Gesellschaft zur Förderung der angewandten Forschung e.V., 80686 München (DE)
(72) Erfinder: WOLTER, Herbert, 97082 Würzburg (DE); NIQUE, Somchith, 97082 Würzburg (DE); SCHWAIGER, Johannes, 97082 Würzburg (DE)
(74) Vertreter: Strehl Schübel-Hopf & Partner
(86) Internationale Anmeldenummer: PCT/EP2019/063979
(87) Internationale Veröffentlichungsnummer: WO 2019/238426

(56) Entgegenhaltungen:
- EP-A1- 0 779 890
- JP-A- 2011 242 572
- MISRA A ET AL: "Immobilization of self-quenched DNA hairpin probe with a heterobifunctional reagent on a glass surface for sensitive detection of oligonucleotides", BIOORGANIC & MEDICINAL CHEMISTRY : A TETRAHEDRON PUBLICATION FOR THE RAPID DISSEMINATION OF FULL ORIGINAL RESEARCH PAPERS AND CRITICAL REVIEWS ON BIOMOLECULAR CHEMISTRY, MEDICINAL CHEMISTRY AND RELATED DISCIPLINES, ELSEVIER, NL, Bd. 17, Nr. 16, 15. August 2009 (2009-08-15), Seiten 5826-5833, XP026586170, ISSN: 0968-0896, DOI: 10.1016/J.BMC.2009.07.015 [gefunden am 2009-07-24]
- M G Voronkov ET AL: "Trialkylsilyl- and 1-silatranylmethyl esters of 4-aminobenzoic acid", Bulletin of the Academy of Sciences of the USSR, Division of chemical science, 1. Januar 1984 (1984-01-01), Seiten 841-842, XP055600079, Gefunden im Internet: URL:https://link.springer.com/content/pdf/ 10.1007/BF00947849.pdf [gefunden am 2019-06-27]

## Beschreibung

Die vorliegende Erfindung betrifft neue Silane sowie die Herstellung biodegradierbarer, organisch modifizierbarer Kieselsäurepolykondensate (Harzsysteme) und Polymerisate daraus oder damit. Die erfindungsgemäßen Silane enthalten einen oder mehrere über Sauerstoff an das Silicium gebundene Substituenten mit kurzen oder längeren Kohlenwasserstoffketten, wobei längere Ketten entweder durch hydrolysierbare und/oder enzymatisch oder anderweitig spaltbare Gruppen innerhalb dieser Ketten unterbrochen und/oder derart substituiert sind, dass bei einer Spaltung dieser Gruppen die verbleibenden Kohlenwasserstoffketten wasserlöslich sind. Diese Substituenten enthalten weiterhin Thiol- und/oder Amin-Gruppen. Die Silane lassen sich anorganisch kondensieren und/oder organisch über eine Additionsreaktion mit Verbindungen mit C=C-Doppelbindungen oder Ringen (Resten "X") verknüpfen. Die Umsetzung von Silanen mit mehreren Thiol- und/oder Aminogruppen und von Kondensaten aus den erfindungsgemäßen Silanen mit Verbindungen mit zwei oder mehr C=C-Doppelbindungen und/oder Ringen führt zu Polymerisationsprodukten. Erfindungsgemäß enthalten die Reaktionspartner mit den Resten X ebenfalls kurze oder längere Kohlenwasserstoffketten, wobei längere Ketten entweder durch hydrolysierbare und/oder enzymatisch oder anderweitig spaltbare Gruppen innerhalb dieser Ketten unterbrochen und/oder derart substituiert sind, dass bei einer Spaltung dieser Gruppen die verbleibenden Kohlenwasserstoffketten wasserlöslich sind. Es kann sich bei ihnen um rein organische Materialien (Monomere oder Oligomere) oder um kondensierte silanbasierte Systeme handeln. Die Additionsreaktion bzw. Polyaddition/ Polymerisation von Thiol- bzw. Amin- und En/Ringöffnender-Komponente kann beispielsweise thermisch oder redoxinduziert oder durch die Bestrahlung mit sichtbarem und/oder UV-Licht durchgeführt werden. Somit ergeben sich als mögliche Verarbeitungsprozesse zur Herstellung strukturierter Materialien z.B. die 2- bzw. Multi-Photonen-Polymerisation (2PP; MPP), das Digital Light Processing Verfahren (DLP), die Stereolithografie (STL), das Multi Jet Modelling (MSM), das Poly Jet Printing (PJP), Ink Jet, UV-Lithographie, Nanoimprint und Siebdruck. Die so erhaltenen Materialien und großenteils auch ihre Vorstufen sind stabil gegenüber einer Bestrahlung mit γ-Strahlen so dass sie sterilisierfähig sind. Durch Variation des Anteils an anorganisch vernetzbaren Einheiten und/oder an organisch polymerisierbaren/polyaddierbaren Einheiten lassen sich die mechanischen Eigenschaften der aus den Silanen erzeugten Hybridpolymere gezielt so einstellen, dass sie denjenigen natürlicher, weicher oder harter Gewebe ähneln. Sie lassen sich von Zelltypen wie Endothelzellen besiedeln und eignen sich daher z.B. als Scaffolds zur Stabilisierung und Züchtung von Zellen bzw. Gewebe. Die Hybridpolymere werden bei Lagerung in Puffern innerhalb weniger Wochen mehr oder weniger stark zersetzt, wobei toxisch unbedenkliche, meist wasserlösliche, kleinteilige Abbauprodukte entstehen.

Aufgrund der steigenden Lebenserwartung der Menschen in Deutschland und der daraus resultierenden Unterversorgung mit benötigten Spenderorganen werden dringend Alternativen zur Organtransplantation von Spender zu Empfänger benötigt. Schon in den 1990er Jahren kam die Idee für das sogenannte *Tissue Engineering* auf. Dieses interdisziplinäre Feld hat sich zum Ziel gesetzt, die Funktion geschädigten Gewebes zu verbessern oder zu ersetzen, um idealerweise ganze Ersatzorgane und -gewebe aus patienteneigenem Material zu züchten. Damit Zellen außerhalb des Körpers funktionierende dreidimensionale Strukturen bilden, benötigen sie eine unterstützende Matrix, die beim *Tissue Engineering* durch künstliche Gerüststrukturen (englisch: *scaffolds*) realisiert wird. Diese kann entweder *in-vitro* mit Zellen besiedelt werden, die dann wachsen, sich vermehren und schließlich Gewebe bilden, welches anschließend transplantiert wird, oder aber direkt im Körper an der zu behandelnden Stelle verwendet werden, um das Nachwachsen des umliegenden Gewebes zu unterstützen. In beiden Fällen ist es von Vorteil, wenn sich das *Scaffold* mit der Zeit zersetzt und so Platz für die Gewebebildung schafft. Aus diesem Grund werden vorwiegend Materialien gesucht, die mit der Zeit vom Körper abgebaut und ausgeschieden werden. Neben dem *Tissue Engineering* werden biodegradierbare Polymere auch als Wirkstofffreisetzungssysteme (*drug delivery*) für Langzeitmedikationen, resorbierbare Nahtmaterialien oder Implantate z. B. zur Fixierung nach Knochenbrüchen verwendet.

Die bisher verwendeten biodegradierbaren Polymere sind allerdings nicht frei von Nachteilen. Natürliche Polymere sind sehr teuer, haben keine einstellbaren Abbauraten und nur begrenzt anpassbare mechanische Eigenschaften. Außerdem können sie Abwehrreaktionen des Körpers provozieren und/oder bieten keine gute Zelladhäsion, die für die Gewebebildung nötig ist. Einige Vertreter, wie PLA und PGA, werden zu sauren Produkten wie z. B. Milch- und Glykolsäure hydrolysiert, die den weiteren Polymerabbau zusätzlich katalysieren (Autokatalyse), weshalb er nur schwer vorhersagbar ist. Ferner können diese Produkte auch Entzündungsreaktionen verursachen.

Zur Herstellung von Scaffolds gibt es zahlreiche Verfahren. Zur Herstellung hochkomplexer Strukturen können heute dreidimensionale Objekte mit Hilfe eines Computer-generierten Designs (*computer-aided designs*, CAD) aus mehreren Schichten aufgebaut werden. Verfahren, die sich diese Technik zu Nutze machen, werden als *Rapid Prototyping-* oder *Solid Free-Form*-Verfahren bezeichnet. Mit diesen Methoden können anatomisch angepasste Scaffolds auf Grundlage von Computer-Tomographie (CT)- oder Magnet-Resonanz-Tomographie (MRT)-Daten erzeugt werden. Häufig angewendet wird die Stereolithographie. Bei dieser Technik wird eine Photopolymerisation durch elektromagnetische Strahlung initiiert. Ein Spezialfall der Stereolithographie ist die Zwei-Photonen-Polymerisation (*two photon polymerization,* 2PP). Mit dieser Technik können ultrafeine Strukturen bei hoher Auflösung erzeugt werden.

Zur adäquaten Nachahmung der ECM (der extrazellulären Matrix) für das *Tissue Engineering* sind aus chemischer Sicht Scaffolds aus Biopolymeren, die mittels 2PP erzeugt wurden, gut geeignet. Bei der Verwendung abbaubarer Scaffoldmaterialien besteht durch die Zerlegung des Gerüsts zusätzlich die Möglichkeit, Raum für die Zellmigration und -expansion zu schaffen.

Schon seit Längerem werden für die Medizintechnik verwendbare Materialien gesucht, die sich gezielt strukturieren lassen und die trotz dabei erfolgter Polymerisation organischer Gruppen, insbesondere von (Methacrylat- und anderen) C=C-Doppelbindungen biodegradierbar sind. Unter anderem wurden hierfür bioabbaubare organisch polymerisierbare Hybridpolymere in Betracht gezogen. Hierbei handelt es sich in der Regel um Abwandlungen bekannter ORMOCER^{®}e, d.h. von hydrolytisch kondensierten Silanverbindungen, die organisch vernetzbare Gruppen tragen. Manche derartige ORMOCER^{®}e sind bereits als inhärent biokompatibel beschrieben worden. Von Hybridmaterialien, die unter physiologischen Bedingungen zumindest teilweise auch bioabbaubar sind, wurde ebenfalls bereits berichtet. R. Houbertz et al. zeigten in Coherence and Ultrashort Pulse Laser Emission, 2010, 583 und in WO 2011/098460 A1 biokompatible, durch 2PP strukturierbare Materialien. Diese enthalten entweder über Si-C-Bindungen angebundene Reste, die organisch polymerisierbare Gruppen tragen, oder sie werden aus einem Gemisch von Silanen mit Si-C-gebundenen, organisch polymerisierbaren Resten und organisch polymerisierbaren Verbindungen erzeugt. Es wurde gezeigt, dass diese Materialien bis zu einem gewissen Grad biologisch auf hydrolytischem Wege abbaubar sind und von Zellen besiedelt werden können.

Obel et al. konnten durch die Einführung einer hydrolytisch spaltbaren Si-O-C-Bindung die polymerisierbare Gruppen enthaltenden organischen Reste derart in die Hybridpolymerstruktur integrieren, dass nach der Polymerisation ein weitreichend degradierbares Material erhalten wird. Wie sich anhand von Beispielen der WO 2016/037871 A1 ergibt, erleiden solche strukturierten Materialien in Wasser wie auch in Puffern wie PBS einen Gewichtsverlust. Mittels NMR-Spektroskopie konnte die hydrolytische Spaltung der Struktur an allen spaltbaren Stellen und damit die Degradation des Materials nachgewiesen werden. Die teildegradierbaren Materialien können von Zellen besiedelt werden.

Die organische Vernetzung der Materialien erfolgt gemäß WO 2016/037871 A1 in der Regel durch den Aufbau von Polymethacrylat-Ketten. Diese werden bei der hydrolytischen Spaltung der Materialien nicht abgebaut und verbleiben daher im Abbauprodukt.

EP 0 779 890 A1 offenbart Silane, worin Reste mit mindestens einem Kohlenstoffatom mit dem Siliziumatom verbunden sind, und ihre Verwendung zur Herstellung von organisch modifizierten Kieselsäurepolykondensaten.

Aufgabe der vorliegenden Erfindung ist es, vernetzbare und vernetzte Materialien bereit zu stellen, die einerseits einer engeren Vernetzung zugänglich sind bzw. enger vernetzt sind als rein organische Materialien und daher mechanische Eigenschaften erreichen können, die sich im Wesentlichen nur mit siliciumhaltigen Hybridmaterialien einstellen lassen, die sich andererseits jedoch unter physiologischen Bedingungen vollständiger abbauen lassen als die bisher bekannten Hybridmaterialien, wobei insbesondere das Vorhandensein von längeren, schlecht spaltbaren und damit schlecht abbaubaren Kettenstrukturen wie Polymethacrylatketten vermieden werden soll. Auch sollen die erfindungsgemäßen Materialien nach Möglichkeit sterilisierbar und biokompatibel sein, so dass sie sich für die Herstellung von Implantaten oder Scaffolds eignen.

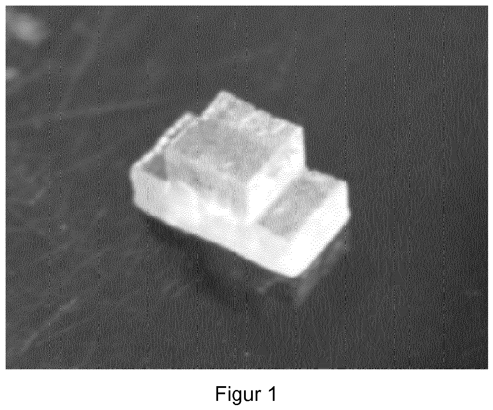

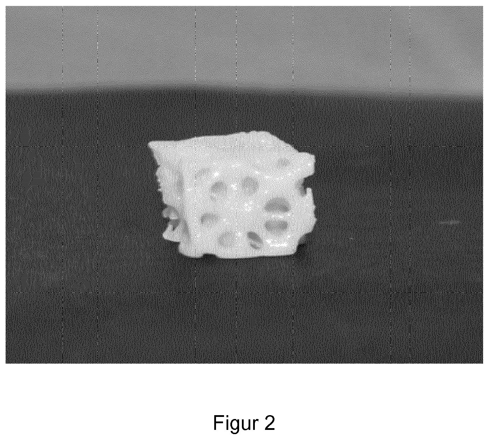

Figur 1 zeigt einen mit Hilfe des Digital Light Processing (DLP-Verfahren) gedruckten 3D-Formkörper aus einem erfindungsgemäßen Material. Figur 2 zeigt einen nach demselben Verfahren gedruckten, porösen Formkörper, ebenfalls aus erfindungsgemäßem Material.

Die vorliegende Erfindung ist in den beigefügten Ansprüchen definiert.

Insbesondere stellt die vorliegende Erfindung ein Silan der Formel (1)

R¹ₐSiR₄₋ₐ (1)

bereit, wobei
die Gruppe R¹ oder jede der Gruppen R¹ unabhängig voneinander
   - über ein Sauerstoffatom an das Silicium gebunden ist,
   - eine geradkettige oder verzweigte kohlenwasserstoffhaltige Kette mit mehreren Strukturelementen aufweist, die jeweils nicht mehr als 8 aufeinander folgende Kohlenstoffatome besitzen, wobei die kohlenwasserstoffhaltige Kette aus Alkyleneinheiten aufgebaut ist, deren Glieder unsubstituiert oder substituiert sind, wobei die Substituenten unter Hydroxy-, Carbonsäure-, Phosphat-, Phosphonsäure-, Phosphorsäureester-, tertiären Aminogruppen und Aminosäuregruppen ausgewählt sind, und die kohlenwasserstoffhaltige Kette innerhalb der einzelnen Elemente weiterhin durch Sauerstoffatome, Schwefelatome oder Sulfonylgruppen unterbrochen sein kann, wobei jedes der Strukturelemente der kohlenwasserstoffhaltigen Kette durch eine Estergruppe als spaltbare Gruppe vom nächsten Strukturelement getrennt ist,
   - mindestens eine Thiol- oder eine primäre oder sekundäre Aminogruppe aufweist,
die Gruppe R oder jede der Gruppen R unabhängig voneinander eine hydrolytisch kondensierbare Gruppe ist, die unter Alkyl-COO-, Alkyl-O- und HO- ausgewählt ist, und
a 1, 2, 3 oder 4 ist.

Außerdem stellt die vorliegende Erfindung ein organisch modifiziertes Kieselsäurepolykondensat, umfassend ein hydrolytisches Kondensationsprodukt eines erfindungsgemäßen Silans oder einer Mischung mehrerer dieser Silane, bereit.

Außerdem stellt die vorliegende Erfindung ein organisch modifiziertes, polymerisiertes Kieselsäurepolykondensat, herstellbar durch Umsetzen des erfindungsgemäßen Silans und/oder eines erfindungsgemäßen, organisch modifizierten Kieselsäurepolykondensates mit einer Verbindung R²(X)_{b} (2) bereit, worin die Gruppe R² ein b-fach bindiges Kohlenwasserstoffgerüst mit einer geradkettigen oder verzweigten, kohlenwasserstoffhaltigen Kette mit einem oder mehreren Strukturelementen aufweist, die jeweils nicht mehr als 8 aufeinander folgende Kohlenstoffatome besitzen, wobei jedes von mehreren Strukturelementen der kohlenwasserstoffhaltigen Kette durch eine spaltbare Gruppe vom nächsten Strukturelement getrennt ist, wobei die spaltbaren Gruppen ausgewählt sind unter Ester-, Anhydrid-, Amid-, Carbonat-, Carbamat-, Ketal-, Acetal-, Disulfid-, Imin-, Hydrazon- und Oxim-Gruppen, X eine Gruppe ist, die bei der genannten Umsetzung mit der mindestens einen Thiol-oder primären oder sekundären Aminogruppe des Restes R¹ des Silans der Formel (1) eine Additionsreaktion eingeht, und b 2, 3, 4 oder größer 4 ist.

Außerdem stellt die vorliegende Erfindung die Verwendung des erfindungsgemäßen, organisch modifizierten, polymerisierten Kieselsäurepolykondensats in Gestalt eines Formkörpers als biologisch oder medizinisch verwendbarer Gegenstand oder als Gegenstand zur Zell- oder Gewebestabilisierung oder zur Zell- oder Gewebezüchtung bereit.

Die Thiol- oder primäre oder sekundäre Aminogruppe ist eine polyaddierbare Gruppe.

Vorzugsweise besteht in dem Silan der Formel (1) mindestens eine oder jede der Gruppen R¹ ausschließlich aus organischen Komponenten.

Vorzugsweise befinden sich in dem Silan der Formel (1) die mindestens eine Thiol- oder primäre oder sekundäre Aminogruppe am dem Silicium abgewandten Ende der Gruppe R¹, oder, im Falle verzweigter Ketten, mindestens an einem dem Silicium abgewandten Ende der Gruppe R¹.

Die Anzahl der Elemente mit den Merkmalen (a) und (b) in einer Gruppe R¹ ist vorzugsweise zwei bis zehn, stärker bevorzugt zwei bis sechs.

Vorzugsweise besitzt in dem Silan der Formel (1) mindestens eines der Elemente des Kohlenwasserstoffgerüstes des Restes R¹ maximal sechs, bevorzugt nicht mehr als vier und besonders bevorzugt nicht mehr als drei aufeinander folgende Kohlenstoffatome. Besonders bevorzugt ist, dass alle Elemente des Kohlenwasserstoffgerüstes des Restes R¹ maximal drei aufeinander folgende Kohlenstoffatome aufweisen. Dies kann für alle Reste R¹ gelten, so dass in den Resten R¹ in dem Silan ausschließlich Elemente des Kohlenwasserstoffgerüstes mit maximal drei aufeinander folgenden Kohlenstoffatomen vorhanden sind.

Vorzugsweise ist in dem Silan der Formel (1) jede Gruppe R eine hydrolytisch kondensierbare Gruppe und/oder Alkyl, mit der Maßgabe, dass mindestens eine Gruppe R eine hydrolytisch kondensierbare Gruppe ist und nicht mehr als eine Gruppe R eine Alkylgruppe ist.

Vorzugsweise ist in dem Silan der Formel (1) a gleich 2 oder, bei einer Mischung mehrerer solcher Silane, durchschnittlich etwa 2.

In dem organisch modifizierten, polymerisierten Kieselsäurepolykondensat besitzt das Element oder mindestens eines der Elemente der kohlenwasserstoffhaltigen Kette des Restes R² bevorzugt maximal sechs, stärker bevorzugt nicht mehr als vier und besonders bevorzugt nicht mehr als drei aufeinander folgende Kohlenstoffatome.

Die Verbindung (2) enthält vorzugsweise kein Silizium.

Die Anzahl der Elemente in einer Gruppe R² ist vorzugsweise zwei bis zehn, stärker bevorzugt zwei bis sechs.

Die Edukte der Umsetzung, also das Silan oder das Polykondensat einerseits und die Verbindung R²(X)_{b} andererseits, können in beliebigen Mengenverhältnissen zueinander eingesetzt werden. Die Verbindung R²(X)_{b} kann im stöchiometrischen Unterschuss oder Überschuss zu dem Silan oder dem Polykondensat oder in gleicher Menge, bezogen auf die miteinander reagierenden Gruppen, eingesetzt werden. Wird beispielsweise eine vollständige Umsetzung der polyaddierbaren Gruppen, z. B. der Thiolgruppen, in dem Silan oder Polykondensat gewünscht, kann die Verbindung R²(X)_{b} im Überschuss zugegeben werden. Wird aber beispielsweise keine vollständige Umsetzung der polyaddierbaren Gruppen, z. B. der Thiolgruppen, in dem Silan oder Polykondensat gewünscht, kann die Verbindung R²(X)_{b} im Unterschuss zugegeben werden. Auf diese Weise wird ein Teil der polyaddierbaren Gruppen nicht umgesetzt und kann dann zum späteren Anbinden von Molekülen, z. B. Enzymen, dienen oder durch die Polarität der Gruppen auch nur beispielsweise die Löslichkeit in einem Medium erhöhen.

In einer Ausführungsform sind in dem organisch modifizierten, polymerisierten Kieselsäurepolykondensat nicht umgesetzte polyaddierbare Gruppen des Silans oder Polykondensats vorhanden, z. B. Thiolgruppen.

In einer anderen Ausführungsform sind in dem organisch modifizierten, polymerisierten Kieselsäurepolykondensat alle polyaddierbaren Gruppen des Silans oder Polykondensats, z. B. Thiolgruppen, umgesetzt worden.

Die Verbindung R²(X)_{b} dient als Vernetzer und ist somit vorzugsweise ein kleines Molekül. Das Molekulargewicht ist vorzugsweise höchstens 3000 g/mol, stärker bevorzugt höchstens 2000 g/mol und am stärksten bevorzugt höchstens 1000 g/mol. In bestimmten Ausführungsformen hat die Verbindung ein Molekulargewicht von höchstens 500 g/mol.

Vorzugsweise enthält diese niedermolekulare Verbindung R²(X)_{b} kein Silizium.

Bevorzugt ist ein organisch modifiziertes, polymerisiertes Kieselsäurepolykondensat, worin die siliziumfreie Verbindung R²(X)_{b} ein Molekulargewicht von höchstens 3000 g/mol aufweist und das Verhältnis der Gruppen X der Verbindung (2) zu der Summe der Thiol- und Aminogruppen in den Silanen (1) und Kondensationsprodukten davon 0,1 bis unter 1,0 ist.

Das erfindungsgemäße organisch modifizierte, polymerisierte Kieselsäurepolykondensat kann weiterhin mindestens einen Füllstoff, vorzugsweise ausgewählt unter Tricalciumphosphat-, Hydroxylapatit-, Bioglas- und Magnesium-Partikeln enthalten.

Die vorliegende Erfindung unterscheidet sich von dem Gegenstand der WO 2016/037881 A1. In dem Verfahren der WO 2016/037881 A1 sind die C=C-Doppelbindungen in dem Silan bzw. dem Polykondensat enthalten. Solche C=C-Doppelbindungen sind z. B. in Acrylaten enthalten. Bei der Umsetzung mit einem Thiol muss das Thiol im Überschuss eingesetzt werden, damit kein nicht-umgesetztes und damit toxisches Acrylat übrigbleibt. Nach der Reaktion muss das überschüssige Thiol ausgewaschen werden. In der vorliegenden Erfindung ist dagegen das Thiol in dem Silan bzw. dem Polykondensat enthalten. Wird der acrylathaltige Vernetzer im Unterschuss zugegeben, wird er vollständig umgesetzt. Ein nachfolgendes Entfernen von nichtumgesetztem Vernetzer ist nicht erforderlich.

Aufgrund dieser grundlegenden Unterschiede ergeben sich die nachfolgenden Vorteile (1) bis (7) der vorliegenden Erfindung:
(1) In dem Verfahren der WO 2016/037871 A1 muss das Thiol im Überschuss zugegeben werden, damit toxisches Acrylat vollständig umgesetzt wird. Dadurch ist das Verfahren der WO 2016/037871 A1 grundsätzlich eingeschränkt. Diese Einschränkung gilt für die vorliegende Erfindung nicht.
(2) Da Thiol nicht im Überschuss zugegeben werden muss, entfällt das Entfernen des überschüssigen Thiols nach der Reaktion.
(3) Durch Einsatz eines Unterschusses an Vernetzer, z. B. Acrylat, kann eine unerwünschte intramolekulare Vernetzung vermieden werden.
(4) Die Reaktionsreihenfolge von Kondensation und nachfolgender Polymerisation ist im Vergleich zu WO 2016/037871 A1 weniger eingeschränkt. Wenn zuerst kondensiert und dann polymerisiert wird, werden aufgrund von sterischen Behinderungen möglicherweise nicht alle im Polykondensat enthaltenen polymerisierbaren Gruppen umgesetzt. Im Fall der vorliegenden Erfindung ist dies jedoch nicht problematisch, da die im Polykondensat enthaltene polyaddierbare Gruppe ein nicht-toxisches Thiol ist, während es im Fall von WO 2016/037871 A1 ein toxisches Acrylat sein kann.
(5) Als Vernetzer kann in der vorliegenden Erfindung auch eine voluminöse cyclische Gruppe, die C=C-Doppelbindungen enthält, eingesetzt werden. Umgekehrt wäre eine solche voluminöse cyclische Gruppe als Bestandteil eines Polykondensats aus sterischen Gründen problematisch und würde zudem die Viskosität übermäßig erhöhen.
(6) Wenn der acrylathaltige Vernetzer im Unterschuss zugegeben wird, verbleiben in dem Polykondensat nicht-umgesetzte Thiole. Diese können die Polarität und damit die Kompatibilität mit einem wässrigen Medium erhöhen, oder sie können eine geeignete Funktionalisierung darstellen, um weitere Gruppen, z. B. bioaktive Subtanzen wie Enzyme, an das fertige Produkt, also das polymerisierte Polykondensat, zu binden.
(7) In der vorliegenden Erfindung kann als Ausgangsverbindung Siliciumtetraacetat eingesetzt werden. Die Verwendung dieser Verbindung führt bei der organischen Modifizierung zu einer nahezu vollständigen Umesterung und ist daher vorteilhaft. Die hydrolytische Kondensation wird dann im Gegensatz zum Stand der Technik bei erhöhter Temperatur, beispielsweise bei 90 °C, durchgeführt (vgl. Beispiel C), um aus dem Siliciumtetraacetat die Acetatgruppen vollständig abzuspalten. Dies ist vorteilhaft, da verbleibende Acetatgruppen sauer reagieren und damit zelltoxisch sind. Die Verwendung von Siliciumtetraacetat ist also nur möglich, wenn die hydrolytische Kondensation bei erhöhter Temperatur erfolgen kann. Da Acrylate, welche temperaturempfindlich sind, nicht in den Silanen, sondern im Vernetzer enthalten sind, kann die hydrolytische Kondensation bei erhöhter Temperatur durchgeführt werden. Im Gegensatz dazu sind in den Silanen des Standes der Technik Acrylate enthalten, wodurch der Einsatz einer erhöhten Temperatur und damit die Verwendung von Siliciumtetraacetat ausgeschlossen sind.

In dem Silan der Formel (1) können, sofern a größer 1 ist, die Reste R¹ gleich oder verschieden sein. Sofern 4-a größer 1 ist, können die Reste R gleich oder verschieden sein.

Die Bindung von R¹ an das Siliciumatom kann als Gruppierung C-O-Si oder als C(O)-O-Si ausgestaltet sein. R¹ ist damit im ersteren Fall als Alkoxy-, im letzteren Fall als Acyloxyrest anzusprechen.

Wie oben definiert, darf die kohlenwasserstoffhaltige Kette von R¹ nicht mehr als 8 aufeinander folgende Kohlenstoffatome besitzen, vorzugsweise jedoch weniger als 8. Sind es insgesamt 8 oder weniger als 8, so ist das Vorhandensein einer spaltbaren Gruppe optional. Ist die Anzahl größer, so müssen spaltbare Gruppen vorhanden sein, durch die die kohlenwasserstoffhaltigen Kette(n) unterbrochen ist/sind, derart dass nicht mehr als 8, vorzugsweise aber noch weniger Kohlenstoffatome aufeinander folgen. Auch bei insgesamt höchstens 8 Kohlenstoffatomen in der kohlenwasserstoffhaltigen Kette kann diese optional (und bevorzugt) durch spaltbare Gruppen in kleinere Elemente unterteilt sein. Je kürzer das oder die aus Kohlenwasserstoffgruppen aufgebauten Elemente ist/sind, desto besser ist die Abbaubarkeit, weil beim Abbau umso kürzere Bruchstücke entstehen.

Die kohlenwasserstoffhaltige Kette von R¹ ist vorzugsweise aus Alkyleneinheiten aufgebaut. Deren Glieder können, müssen aber nicht, mit einem oder mehreren Substituenten substituiert sein, wobei die Substituenten vorzugsweise ausgewählt sind unter Hydroxy-, Carbonsäure-, Phosphat-, Phosphonsäure-, Phosphorsäureester-, tertiären Aminogruppen und Aminosäuregruppen.

Die kohlenwasserstoffhaltige Kette von R¹ kann innerhalb des einzigen oder der einzelnen Elemente weiterhin durch Sauerstoffatome (Ethergruppen), Schwefelatome (Thioethergruppen) oder Sulfonylgruppen (-S(O)₂-) unterbrochen sein.

Bei den spaltbaren Gruppen von R¹ handelt es sich um Estergruppen.

In einer ersten besonders bevorzugten Ausführungsform handelt es sich bei dem Silan um ein solches, das zwei oder, im Falle einer Mischung mehrerer Silane, etwa zwei Acylreste pro Silicium und zwei bzw. etwa zwei Reste R¹ aufweist.

In einer mit dieser kombinierbaren oder davon unabhängigen Ausführungsform ist der Rest R¹ ein mit einer Thiolgruppe substituierter Alkoxyrest mit vorzugsweise 2 bis 6 Kohlenstoffatomen. Die Thiolgruppe kann sich am dem Silicium abgewandten Ende von R¹ befinden; stattdessen kann eine nicht-endständige CH₂-Gruppe mit der Thiolgruppe substituiert sein, wobei sich dieser Rest vorzugsweise möglichst weit beabstandet vom Siliciumatom befindet.

In einer alternativen, mit der ersten besonders bevorzugten Ausführungsform kombinierbaren oder davon unabhängigen Ausführungsform ist der Rest R¹ verzweigtkettig und besitzt zwei Thiolgruppen, die sich vorzugsweise an den dem Silicium abgewandten Enden von R¹ befinden.

In einer weiteren, mit der ersten besonders bevorzugten Ausführungsform kombinierbaren oder davon unabhängigen Ausführungsform ist der Rest R¹ geradkettig; seine Kohlenwasserstoffkette besitzt 4 bis 20 Kohlenstoffatome. Diese Kette ist durch eine oder mehrere Estergruppen (-C(O)O-, die in eine beliebige der beiden möglichen Richtungen weisen kann/können) unterbrochen; die dabei gebildeten einzelnen Elemente können weiterhin durch Schwefel- und/oder Sauerstoffatome unterbrochen sein. Eine Thiolgruppe befindet sich vorzugsweise am dem Silicium abgewandten Ende der Kette. Bei dieser Thiolgruppe kann es sich um die einzige oder um eine von mehreren Thiolgruppen am Rest R¹ handeln.

In weiteren Ausgestaltungen der Erfindung sind die voranstehend als bevorzugt genannten Ausführungsformen dahingehend abgewandelt, dass die Thiolgruppen durch Aminogruppen, vorzugsweise primäre Aminogruppen, ersetzt sind. Dabei sei angemerkt, dass diese mit C=C-Gruppen nur dann analog zu einer Thiol-En-Reaktion reagieren, wenn die Doppelbindung des Reaktionspartners in aktivierter Form vorliegt, beispielsweise als Acryl- oder Methacrylgruppe (z.B. als (Meth)acrylatgruppe).

In der Regel wird die Thiol-Addition in Gegenwart eines Initiators durchgeführt, wie aus dem Stand der Technik bekannt, während die Amin-Addition auch ohne Initiator möglich ist.

Die Silane der Formel (1) sind auf verschiedenen Wegen zugänglich. So können sie beispielsweise hergestellt werden, indem ein Silan der Formel R^{x}ₐSiR₄₋ₐ (3), worin a und R die für Formel (1) angegebenen Bedeutungen besitzen und R^{x} R³COO⁻ bedeutet, wobei R³ C₁-C₆-Alkyl, vorzugsweise Methyl ist, mit einer Verbindung R¹-OH umgesetzt wird, worin R¹ die für Formel (1) angegebene Bedeutung besitzt. Dabei wird/werden je nach eingesetzten

Mengenverhältnissen eine oder mehrere der Acylgruppen R³COO⁻ durch R¹-O- verdrängt.

Günstig ist es, wenn sowohl die Reste R^{x} als auch die Reste R Acylreste sind, beispielsweise Acetylreste. Bei Zusatz von zwei Mol R¹OH pro Mol Silan mit vier Acylresten entsteht eine Mischung mit durchschnittlich zwei Resten R¹ pro Silanatom.

Die erfindungsgemäßen Silane oder auch Mischungen dieser Silane lassen sich z.B. über eine Hydrolyse-Reaktion anorganisch kondensieren. Dabei entsteht ein anorganisch vernetztes Kondensat (organisch modifiziertes Kieselsäurepolykondensat) mit vielen Thio- oder Aminogruppen, das sich mit C=C-doppelbindungshaltigen Verbindungen oder ringhaltigen Verbindungen, die von Thiolen bzw. Aminen unter Ringöffnung angegriffen werden, zu einem anorganisch und organisch vernetzten Produkt (Polymer) weiter umsetzen lässt. In einer speziellen Ausführungsform werden den erfindungsgemäßen Silanen bei der Hydrolyse-Reaktion entweder weitere bekannte, hydrolytisch kondensierbare Silane und/oder Alkoxyverbindungen von Heteroatomen wie z.B. B, Al, Zr, Zn oder Sn zugegeben. Werden Alkoxyverbindungen von Heteroatomen zugesetzt, ist das Kondensat auch als organisch modifiziertes Kieselsäureheteropolykondensat anzusprechen. Fehlen solche Zusätze, entsteht ein Kieselsäurehomopolykondensat. Der Ausdruck "Kieselsäurepolykondensat" soll sowohl Hetero- als auch Homokondensate umfassen.

Wie oben definiert, darf jedes Element der kohlenwasserstoffhaltigen Kette von R² nicht mehr als 8 aufeinander folgende Kohlenstoffatome aufweisen, vorzugsweise aber noch weniger. Sind es insgesamt 8 oder weniger als 8, so ist das Vorhandensein einer spaltbaren Gruppe optional. Ist die Anzahl größer, so müssen spaltbare Gruppen vorhanden sein, durch die die Elemente der kohlenwasserstoffhaltigen Kette unterbrochen sind, derart dass nicht mehr als 8, vorzugsweise aber noch weniger Kohlenstoffatome aufeinander folgen. Auch bei insgesamt höchstens 8 Kohlenstoffatomen in der kohlenwasserstoffhaltigen Kette kann dieses optional durch spaltbare Gruppen in kleinere Elemente unterteilt sein. Für den Fall, dass das Kohlenwasserstoffgerüst von R² mehr als eine kohlenwasserstoffhaltige Kette aufweist (z.B. dann, wenn es sich bei der Verbindung (2) um ein Silan oder ein Siloxan,d.h. ein Kieselsäurepolykondensat handelt), gilt diese Bedingung für jede der vorhandenen Ketten. Je kürzer das oder die aus kohlenwasserstoffhaltigen Ketten aufgebauten Elemente ist/sind, desto besser ist die Abbaubarkeit, weil beim Abbau umso kürzere Bruchstücke entstehen.

Das Kohlenwasserstoffgerüst von R² weist vorzugsweise hauptsächlich oder ausschließlich Alkyleneinheiten auf. Deren Glieder können, müssen aber nicht, mit einem oder mehreren Substituenten substituiert sein, wobei die Substituenten vorzugsweise ausgewählt sind unter Hydroxy-, Carbonsäure-, Phosphat-, Phosphonsäure-, Phosphorsäureester-, -tertiären Amino-und Aminosäuregruppen. Das Kohlenwasserstoffgerüst von R² kann aus solchen Alkyleneinheiten bestehen.

Die kohlenwasserstoffhaltige Kette von R² kann innerhalb des einzigen oder der einzelnen Elemente weiterhin durch Sauerstoffatome (Ethergruppen), Schwefelatome (Thioethergruppen) oder Sulfonylgruppen (-S(O)₂-) unterbrochen sein.

Bei den spaltbaren Gruppen von R² kann es sich um hydrolysierbare, also hydrolytisch spaltbare Gruppen handeln. Darunter fallen beispielsweise die Ester- und Anhydridgruppen sowie in der Regel die Ketal-, Acetal-, Disulfid-, Imin-, Hydrazon und Oxim-Gruppen. Es können auch spaltbare Gruppen eingesetzt werden, die enzymatisch spaltbar sind, wie beispielsweise die Ester, Amid-, Carbonat- und Carbamat-Gruppen. Die Gruppen können aber auch sowohl hydrolytisch als auch enzymatisch spaltbar sein. Soweit die genannten Gruppen auch auf zusätzlich anderen Wegen spaltbar sind, ist dies erfindungsgemäß natürlich günstig, da sich dann auch andere Spaltungsreaktionen für den Abbau eröffnen. Estergruppen sind unter den spaltbaren Gruppen bevorzugt.

Mit den Gruppen X der Verbindung (2) gehen die Thiole bzw. Aminogruppen der Silane (1) bzw. der durch Hydrolyse daraus oder damit gebildeten Kondensate ("Kieselsäurepolykondensate) eine Additionsreaktion nach Art einer Thiol-En-Reaktion ein.

Die Gruppen X weisen in einer ersten Ausgestaltung der Erfindung endständige polyaddierbaren C=C-Gruppen auf. Hierbei kann es sich beispielsweise um Acryl- oder Methacrylgruppen (z.B. Acrylat und/oder Methacrylatgruppen), Allylester-, Vinylester-, Allylether-, Vinylethergruppen, Propenylether-, Maleimid- oder N-Vinyl-Amidgruppen handeln. Weiter gehören in diese Gruppen cycloolefinische, bevorzugt bicycloolefinische und besonders bevorzugt unsubstituierte bzw. substituierte Norbornenylgruppen, vorzugsweise der folgenden Formel: 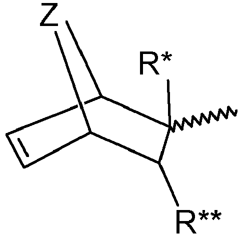 worin R* und R** unabhängig voneinander H oder ein (ggf. funktionalisierter) organischer Rest sein können, R² weiterhin ein organischer Rest sein kann, der C=C-Gruppen enthält, und Z eine Sauerstoffbrücke oder den Rest -(CHR¹)-ₙ bedeutet, wobei R¹ H oder ein (ggf. funktionalisierter) organischer Rest ist und n 1, 2, 3, größer 3 bis etwa 20 oder sogar noch größer sein kann.

In einer alternativen Ausgestaltung der Gruppen X handelt es sich bei diesen um ringöffnende Systeme. Darunter sind z.B. Epoxygruppen und reaktive cyclische Ethergruppen mit z.B. 4 Ringgliedern (Oxetangruppe) zu verstehen. Die Glycidyl- bzw. Oxetangruppe kann unsubstituiert oder substituiert sind. Des Weiteren können cyclische Carbonatgruppen, wie sie beispielsweise in der DE 4423811.8 beschrieben sind, Spiroester / Spiroorthoester (letztere sind beispielsweise in DE 4125201.2 gezeigt) sowie Spiroorthocarbonate und bicyclische Orthoester zum Einsatz kommen.

Bei den Verbindungen (2) kann es sich wie erwähnt um rein organische Verbindungen (vorzugsweise Monomere oder Oligomere) handeln. Beispiele sind mit mindestens zwei Methacrylatresten veresterte Diole oder Triole wie Glycerin sowie deren Umsetzungsprodukte mit Dicyclopentadien. Alternativ kann in das Kohlenwasserstoffgerüst von (2) mindestens eine hydrolysierbare Silylgruppe integriert sein. Das heißt, dass es sich bei (2) um ein Silan handeln kann, das im Wesentlichen oder ausschließlich über Sauerstoff an das Silicium gebundene Reste besitzt, von denen mindestens zwei die genannte Gruppe X tragen oder von denen mindestens eine zwei der genannten Gruppen X trägt, oder es können entsprechende hydrolytische Kondensate (Kieselsäurepolykondensate) aus solchen Silanen genutzt werden, die ebenfalls im Wesentlichen oder ausschließlich über Sauerstoff an das Silicium gebundene Reste besitzen. Diese Polykondensate können dann in der Regel insgesamt mehr als zwei Gruppen X tragen, beispielsweise etwa eine oder zwei Gruppen X pro Siliciumatom; mehr oder weniger ist jedoch selbstverständlich ebenfalls möglich. Als besonders geeignet seien in diesem Zusammenhang die Silane und Silankondensate der WO 2016/ 037871 genannt, die C=C-Doppelbindungen und insbesondere (Meth-)Acrylgruppen tragen.

Wird ein noch nicht hydrolytisch kondensiertes Silan (1) mit der Verbindung (2) zur Umsetzung gebracht und/oder handelt es sich bei der Verbindung (2) um ein (noch) nicht hydrolytisch kondensiertes Silan, so erfolgt nach der Umsetzung von (1) mit (2) vorzugsweise eine nachträgliche hydrolytische Kondensation. Die Regel ist jedoch, dass man von bereits hydrolytisch kondensierten Silanen (1) ausgeht, also einem bereits anorganisch vernetzten Material, und diese entweder mit einer rein organischen Verbindung (2) oder einem hydrolytischen Kondensat eines Silans der Formel (2) umsetzt.

Das Verhältnis zwischen den Gruppen X der Verbindung (2) und den Thiol- bzw. Aminogruppen der Silane (1) bzw. der daraus gebildeten Silankondensate ist variabel. Vorzugsweise werden die Gruppen im Verhältnis 1:1 oder die Thiol- bzw. Aminogruppen im Unterschuss zu den Gruppen X eingesetzt. Letzteres ist z.B. dann günstig, wenn die Gruppen X homopolymerisationsfähig sind, also beispielsweise (Meth-)Acrylgruppen sind. Dann findet neben der Additionsreaktion der Thiol- bzw. Aminogruppen zeitgleich - wenn auch nur in untergeordnetem Umfang - eine Homopolymerisationsreaktion der Gruppen X untereinander statt. Die Gruppen X der Verbindung (2) können aber auch im Unterschuss zugegeben werden. Das Verhältnis der Gruppen X der Verbindung (2) zu der Summe der Thiol- und Aminogruppen der Silane (1) und der ggf. daraus gebildeten Silankondensate kann 0,1 bis unter 1,0 sein, vorzugsweise 0,2 bis 0,9. Alternative Verhältnisse sind 0,5 bis 0,9 oder 0,1 bis 0,5. Auf diese Weise wird vermieden, dass nicht-umgesetzter Vernetzer, der im Fall von Acrylat toxisch ist, im Reaktionsgemisch verbleibt und möglicherweise entfernt werden muss. Außerdem sind in diesem Fall nicht-umgesetzte polyaddierbare Gruppen der Silane (1), nämlich Thiol- oder Aminogruppen, vorhanden, die aufgrund ihrer Polarität beispielsweise die Anhaftung von Zellen fördern oder sich für die kovalente Anbindung weiterer Moleküle eignen. Aus den polyaddierbaren Gruppen der Silane (1) werden dadurch funktionelle Gruppen in dem organisch modifizierten, polymerisierten Kieselsäurepolykondensat.

Die Aushärtung durch die Thiol-En-Reaktion kann über zwei verschiedene Mechanismen ablaufen: Radikalische Thiol-En-Reaktion und Thio-Michael-Addition. Der radikalische Mechanismus wird durch einen Radikalstarter (thermisch und/oder photoinduziert und/oder redoxinduziert) initiiert. Insbesondere nicht aktivierte C=C-Doppelbindungen (wie z. B. Vinyl-, Allyl-, Norbornenylgruppen) eignen sich für diese Art der Initiierung. Um auch eine Thiol-Michael-Addition (insbesondere bei aktivierten C=C-Doppelbindungen, wie z. B. (Meth)acrylatgruppen) örtlich und/oder zeitlich gezielt initiieren zu können, können Photobasen verwendet werden, da die Thiol-Michael-Addition basenkatalysiert abläuft. Photobasen setzen bei Belichtung eine Base frei und können so die Thiol-Michael-Addition initiieren. Bei der Herstellung der erfindungsgemäßen polymerisierten Verbindungen können also auch Photobasen eingesetzt werden. Die Herstellung und Verwendung von Photobasen ist in der Literatur beschrieben.

Wird photochemisch gearbeitet, kann die Bestrahlung mit sichtbarem und/oder UV-Licht durchgeführt werden. Kombinationen verschiedener Umsetzungen, beispielsweise photochemisch und thermisch oder eine Kombination von redoxinduzierter mit z.B. photo induzierter bzw. thermischer Härtung, sind ebenfalls möglich. Somit ergeben sich als mögliche Verarbeitungsprozesse für strukturierte Materialien z.B. die 2- oder Mehr-Photonen-Polymerisation (2PP/MPP), das Digital Light Processing Verfahren (DLP) und die Stereolithografie (STL), wobei diese Aufzählung nicht als abschließend verstanden werden soll. Bei geeigneter Reaktionsführung (Vermeidung eines Überschusses von Verbindung (2), falls diese rein organisch sein sollte) fallen ausschließlich Produkte an, die monomerfrei sind und deshalb nicht allergen sein können.

Die Polymerisationsreaktion kann aus einer (meist flüssigen oder pastösen) Harzmasse heraus (in Bulkform) erfolgen, die die Komponenten enthält. Für strukturierte Produkte wie Scaffolds oder Implantate - aber nicht nur für diese - kann die Polymerisation beispielsweise in einem Bad erfolgen, in dem das Harzmaterial als Masse (flüssig oder pastös) vorgelegt und in einer gewünschten Form oder einem gewünschten Muster polymerisiert wird (VAT-Polymerisation). Hierfür wird vorzugsweise mit Laserlicht in bekannter Weise eine Belichtung durchgeführt, z.B. eine 2- oder Mehr-Photonen-Polymerisation ("TPA processing"), wie beispielsweise in WO 2011/098460 A1 beschrieben. Stattdessen kann natürlich auch eine Strukturierung mit anderen VAT-Polymerisations-Techniken erfolgen, beispielsweise durch das sog. DLP-Verfahren, bei dem die gewünschte Form durch sequentielles Belichten schichtweise aufgebaut wird. Das Bauteil haftet hierbei an einer Bauplattform, welche kopfüber in der Harzmasse hängt. Das Bad mit der Harzmasse wird von unten bestrahlt und das entstehende Bauteil Schicht für Schicht angehoben. Das nicht polymerisierte Material kann anschließend weggewaschen werden. Wird eine Drucktechnik wie Multi Jet Modelling (MSM), das Poly Jet Printing (PJP), Ink Jet angewandt, wird nur das benötigte Material schichtweise übereinander gedruckt, so dass ein Auswaschen nicht nötig ist.

Sollen Scaffolds hergestellt werden, so lassen sich die für das Anwachsen des biologischen Materials benötigten Poren mit Hilfe der genannten Strukturierungstechniken direkt im Formkörper erzeugen. Mit DLP können Poren vor allem im µm-Bereich, mit TPA auch darunter, d.h. im nm-Bereich, erzeugt werden.

Die erfindungsgemäßen Verbindungen, also das Silan, das organisch modifizierte Kieselsäurepolykondensat und das organisch modifizierte, polymerisierte Kieselsäurepolykondensat, können also auch zur Herstellung von Gerüststrukturen (Scaffolds) verwendet werden. Somit kann der erfindungsgemäß herstellbare Formkörper auch eine Gerüststruktur sein.

Durch Reaktion von (1) mit (2) entsteht je nach Anzahl der Reste R¹ und R² ein ggf. kettenförmiges oder ringförmiges, in der Regel jedoch vernetztes Produkt (Hybridpolymer). Dieses ist in der Regel je nach gewählten spaltbaren Gruppen auf verschiedenen Wegen, aber natürlich insbesondere hydrolytisch oder enzymatisch abbaubar, und zwar aufgrund der Tatsache, dass beide Komponenten, (1) wie (2), meist nur kurze Kohlenwasserstoffketten aufweisen, die ggf. durch entsprechende hydrolytisch oder enzymatisch und ggf. anderweitig spaltbare Gruppen voneinander getrennt sind. Stattdessen oder zusätzlich können die bei Spaltung der spaltbaren Gruppen verbleibenden kohlenwasserstoffhaltigen Ketten - zumindest bei der Temperatur des menschlichen Körpers, vorzugsweise aber bei normaler Umgebungstemperatur, also ca. 25 °C - wasserlöslich sein. Die Hybridpolymere werden bei Lagerung in Puffern innerhalb weniger Wochen mehr oder weniger stark zersetzt, wobei toxisch unbedenkliche, meist wasserlösliche, kleinteilige Abbauprodukte entstehen. Auch werden dabei sowohl die organische Netzwerkstruktur wie auch die Sauerstoffbrücke zwischen dem organischen Substituenten und dem Siliciumatom gespalten. Damit sind die erfindungsgemäßen Hybridpolymere geeignet zur Herstellung von vollständig biodegradierbaren bzw. resorbierbaren Implantaten oder Scaffolds mit für den jeweiligen Verwendungszweck angepassten mechanischen Daten. Auch für die Anwendung in Knochenzementen eignen sich die erfindungsgemäßen Silane und Hybridpolymere.

Die so erhaltenen Materialien, wie auch zum Teil ihre Vorstufen sind - im Gegensatz zu manchen Materialien wie (Meth-)Acrylat-Materialien - stabil gegenüber einer Bestrahlung mit γ-Strahlen (bevorzugte Methode, da einfache Handhabung), so dass sie sterilisierfähig sind. Eine Sterilisierung der erzeugten Formkörper ist vor allem im medizinischen Bereich häufig wesentlich, z.B. wenn diese als Knochenersatz oder Scaffolds dienen sollen. Und nicht nur die durchpolymerisierten Produkte der Erfindung sind sterilisierfähig, sondern auch die Silane/Kieselsäurepolykondensate (1) und viele Vernetzer (2), so dass man bereits die Ausgangsmaterialien für die vernetzten Produkte ohne weiteres sterilisieren kann.

Durch Variation des Anteils an anorganisch vernetzbaren Einheiten und/oder an organisch polymerisierbaren/polyaddierbaren Einheiten lassen sich die mechanischen Eigenschaften der aus den Silanen erzeugten Hybridpolymere gezielt so einstellen, dass sie denjenigen natürlicher, weicher oder harter Gewebe ähneln. Sie lassen sich von Zelltypen wie Endothelzellen besiedeln und eignen sich daher z.B. als Scaffolds zur Stabilisierung und Züchtung von Zellen.

Nachstehend soll die Erfindung anhand einer Schemadarstellung eines erfindungsgemäßen Silans der Formel (1) näher erläutert werden. Gezeigt wird einer der Substituenten R¹ am Silan (1), gebunden über ein Sauerstoffatom an das Siliciumatom. Dieses Sauerstoffatom ist hier Teil einer Glycerineinheit. Die beiden übrigen Alkoholgruppen dieser Einheiten sind mit Thioglykolsäuregruppen verestert. Damit ist die Gruppe verzweigt und besitzt an ihren dem Siliciumatom abgewandten Enden Thiolgruppen, die mit einer zwei oder mehr C=C-Doppelbindungen oder Ringe enthaltenden Verbindung (nachstehend allgemein mit "Multi-En" bezeichnet) im Sinne einer Thiol-En-Polyaddition organisch vernetzt werden können.

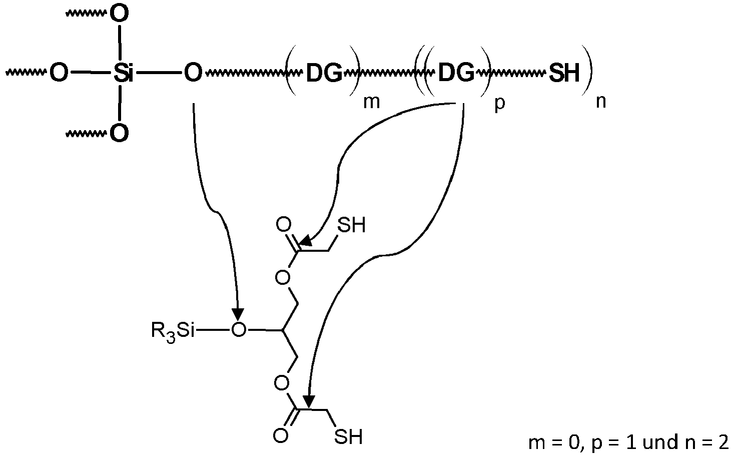

Die beiden in dieser Gruppe vorhandenen beispielhaften Carbonsäureestergruppen sind einer Hydrolyse zugänglich und hier mit DG bezeichnet. Unter Hydrolysebedingungen erfolgt außerdem die Spaltung der Si-O-Bindung. Damit wird ein Material bereitgestellt, das an der Kopplungsstelle der organischen Gruppe zum Silicium degradierbar ist.

Im Folgenden ist die zugehörige vernetzende Komponente (2) in allgemeiner Form und als Beispiel für ein Multi-En dargestellt.

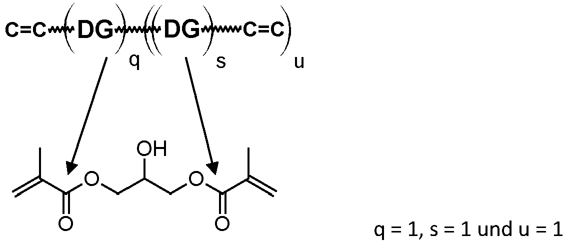

Das Multi-En enthält in diesem Fall zwei hydrolytisch spaltbare Carbonsäureestergruppen, die hier wiederum mit DG bezeichnet werden. Außerdem sind zwei endständige Methacrylatgruppen vorhanden.

Die organische Polymersiation führt zu untenstehender organisch vernetzter Struktur.

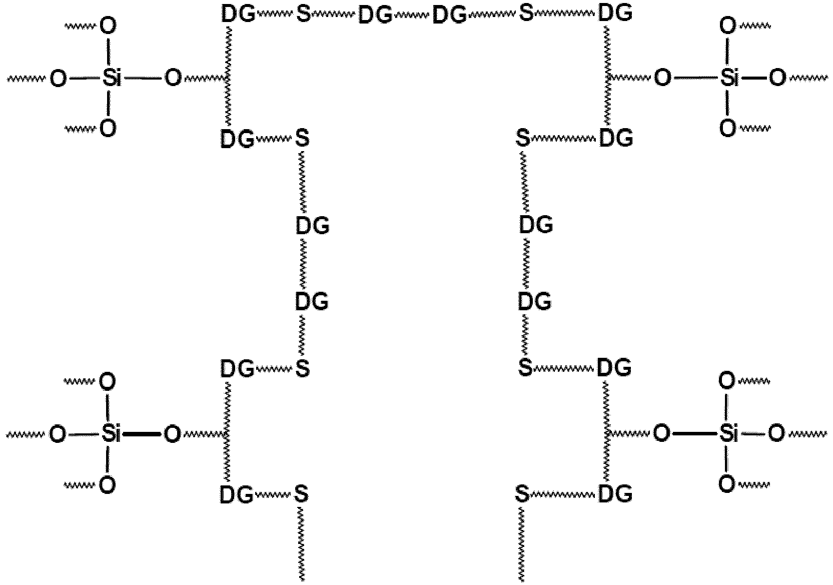

Man erkennt aus den obigen Erläuterungen unmittelbar, dass das Vorsehen von nur kurzen, optional durch Sauerstoffatome, Schwefelatome, Ester-, Amid-, Carbonat-, Carbamat-, Ketal-, Acetal-, Disulfid-, Imin-, Hydrazon- und/oder Oxim-Gruppen unterbrochenen Kohlenwasserstoffketten beim hydrolytischen/enzymatischen/etc. Abbau zu kleinmolekularen Produkten führt, die in der Regel als solche physiologisch unbedenklich sind. So kann der gesamte organische Anteil des Hybridpolymers in kleinmolekulare Produkte zerlegt werden. Im obigen Beispiel entstehen z.B. Glycerin und eine einen Thioether beinhaltende Dicarbonsäure, welche toxikologisch unbedenklich sind. Die verbleibenden, im Wesentlichen anorganischen Reste dürften im Wesentlichen Bruchstücke mit Si-O-Si-Verknüpfungen sein, die nach außen hin mit Hydroxygruppen belegt sind.

Durch eine vor der organischen Vernetzung erfolgende Einarbeitung von Additiven wie z.B. Füllstoffen lassen sich die Materialeigenschaften der erfindungsgemäßen Hybridpolymere auf vielfältige Art und Weise beeinflussen. Hierbei eignen sich besonders Füllstoffe verschiedener Formen, die ihrerseits degradierbar bzw. abbaubar sind, wie z.B. Tricalciumphosphat, Hydroxylapatit, Magnesium-Partikel oder Biogläser (Partikel, aufgebaut aus einer Glasbasis aus z.B. SiO₂, Na₂O bzw. K₂O/CaO/Phosphorverbindungen wie P₂O₅, die sich unter bestimmten Umgebungsbedingungen nach und nach auflösen, siehe Bioactive Glasses, Fundamentals, Technology and Application von Royal Society of Chemistry). Mit solchen Füllstoffen sowie weiteren Additiven lassen sich das Degradationsverhalten, mechanische Eigenschaften wie die mechanische Stabilität (z.B. durch Erhöhung des E-Moduls etc.), die Osteokonduktivität und - induktivität (z.B. bei Knochen-Scaffolds), die Biokompatibilität und/oder die Erzeugung von Poren beeinflussen. Poren lassen sich entweder direkt, durch entsprechende Strukturierung des Formkörpers, oder dadurch erzeugen, dass degradierbare bzw. abbaubare Füllstoffe im organisch vernetzten Material enthalten sind, die nach dem Einsetzen des Formkörpers wie z.B. eines Scaffolds in den Körper schnell degradieren. Auch kann beispielsweise eine lokale Beschleunigung der Degradation erreicht werden, indem ein Füllstoff eingesetzt wird, der beim Zerfall basische Abbauprodukte liefert. Hierfür eignen sich z.B. Biogläser als Füllstoffe. Natürlich können auch nicht-degradierbare Füllstoffe zugesetzt werden, um die mechanische Stabilität eines aus dem erfindungsgemäßen Material erzeugten Formkörpers zu beeinflussen, insbesondere zu erhöhen. Günstig ist es natürlich, wenn solche Füllstoffe ihrerseits kleinteilig sind.

Photobasen und Photosäuren können als Trigger in die Materialsysteme integriert werden, um zu einem späteren Zeitpunkt die Degradation zu initiieren bzw. die Degradationsrate eines Probekörpers zu erhöhen, indem die durch Belichtung der Probe freigesetzten Säuren oder Basen die Spaltung der degradierbaren Gruppen katalysieren. Die Herstellung und entsprechende Verwendung von Photobasen und Photosäuren ist in der Literatur beschrieben.

Der Einsatz von Photobasen ist vorteilhaft, da sie nicht nur, wie vorstehend beschrieben, bei der Synthese der erfindungsgemäßen Verbindungen, sondern auch bei deren Abbau eingesetzt werden können.

Es ist des Weiteren möglich, dem erfindungsgemäßen Material Proteine zuzusetzen, die die Eigenschaften von Wachstumsfaktoren (z.B. bone morphogenic proteins) oder osteoinduktiven Mediatoren besitzen, um die Eignung des Materials als Scaffold beim Tissue Engineering weiter zu verbessern. Solche Proteine können als Additiv oder direkt angebunden an die Komponenten (1) und/oder (2) und damit als deren Bestandteile eingesetzt werden, wobei im letzteren Fall natürlich die Bedingungen eingehalten werden müssen, die für diese angegeben sind (z.B. Bindung der Proteine über eine Estergruppe; Verknüpfung der einzelnen Aminosäure über Säureamidgruppen).

Der Einsatz der erfindungsgemäßen Materialien erstreckt sich u. a. auf die Verwendung in Form von Bulkmaterialien, Fasern, Kompositen, Zementen, Klebstoffen, Vergussmassen, Beschichtungsmaterialien, Einsatz im (Reaktions)extruder, im Bereich der Mehrphotonenpolymerisation. Geeignet sind sie für die verschiedensten Zwecke. Insbesondere ist ein Einsatz für medizinische Anwendungen (z. B. als Implantat, Knochenersatzmaterial, Knochenzement) von Bedeutung. Der Einsatz in anderen Anwendungsbereichen außerhalb des Körpers ist jedoch auch möglich.

Nachstehend soll die Erfindung anhand von Beispielen näher erläutert werden.

### A. Herstellung einer Verbindung R¹-OH (S₃):

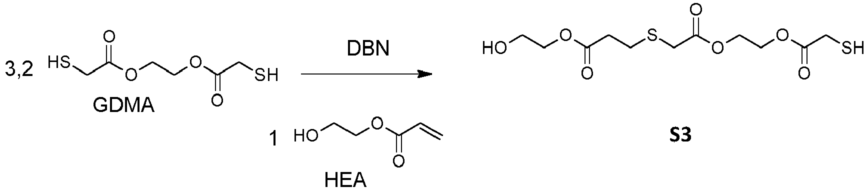

Zu 18,00 g (155,01 mmol, 1,0 Äquiv.) 2-Hydroxyethylacrylat (HEA) wurden 0,07 g (0,06 Gew.-%) 1,5-Diazabicyclo[4.3.0]non-5-en gegeben (DBN). Unter Rühren wurde anschließend 104,32 g (496,04 mmol, 3,2 Äquiv.) Glycol-dimercaptoacetat (GDMA) zugetropft und die Reaktionsmischung für 24 h bei Raumtemperatur gerührt. Das entstehende Produktgemisch wurde mittels Säulchenchromatographie (Dichlormethan/Ethylacetat 10:1) aufgereinigt und das erwünschte Produkt HEA-GDMA (S3) mit einer Ausbeute von 38,01 g (74 %) erhalten.

### B. Herstellung von Silanen der Formel (1)

### B1. Umesterung einer Verbindung R¹-OH (hier: HS-CH₂-CH₂-OH, S₁) mit einem Silan der Formel (3) (hier Si(OAc)₄) zu einem Silan der Formel (1) (Produkt U₁):

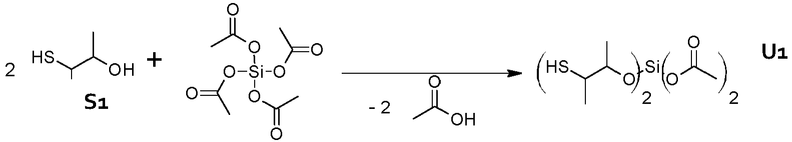

37,33 g (141,26 mmol, 1,0 Äquiv.) Siliciumtetraacetat wurden mit 30,00 g (282,51 mmol, 2,0 Äquiv.) S1 (2-Mercapto-3-butanol), versetzt. Diese Reaktionsmischung wurde zunächst 1 min bei Raumtemperatur gerührt und daraufhin 1,5 h bei 15 mbar auf 50 °C erhitzt. Danach wurde der Druck für weitere 1,5 h auf 1 mbar reduziert. Das Reaktionsgemisch wurde 8 h im Ölpumpenvakuum von flüchtigen Bestandteilen befreit und mit Hilfe von Druckluft über einen Filter mit 15 µm Porengröße filtriert. Bei dem entstehenden Produktgemisch U1 sind durchschnittlich zwei Alkoxygruppen und zwei Acetoxygruppen an ein Siliciumatom gebunden. Ausbeute: 49,62 g (99 %)

### B2. Umesterung einer Verbindung R¹-OH (hier: Trimethylolpropan-di(1-Mercapto-ethylester), S₂) mit einem Silan der Formel (3) (hier Si(OAc)₄) zu einem Silan der Formel (1) (Produkt U₂):

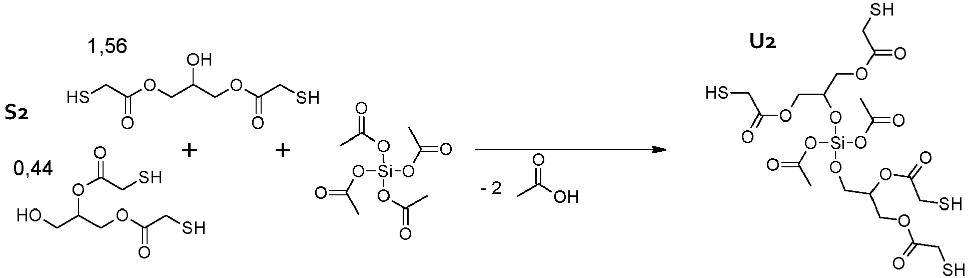

27,49 g (104,04 mmol, 1,0 Äquiv.) Siliciumtetraacetat wurden mit 50,00 g (208,07 mmol, 2,0 Äquiv.) S2 (Isomerengemisch) versetzt. Diese Reaktionsmischung wurde zunächst 1 min bei Raumtemperatur gerührt und daraufhin 10 min bei 50 mbar auf 80 °C erhitzt. Danach wurde der Druck für weitere 2,5 h auf 1 mbar reduziert. Das Reaktionsgemisch wurde 8 h im Ölpumpenvakuum von flüchtigen Bestandteilen befreit und mit Hilfe von Druckluft über einen Filter mit 15 µm Porengröße filtriert. Bei dem entstehenden Produktgemisch U2 sind durchschnittlich zwei Alkoxygruppen (basierend auf unterschiedlichen Anteilen der Isomeren von von S2) und zwei Acetoxygruppen an ein Siliciumatom gebunden. Ausbeute: 63,80 g (98 %). Es ist anzumerken, dass das Mischungsverhältnis der Isomeren von S₂, im Beispiel 1,56:0,44 Mol, beliebig gewählt werden kann.

### B3. Umesterung einer Verbindung R¹-OH (hier: Verbindung aus Herstellung A, S₃) mit einem Silan der Formel (3) (hier Si(OAc)₄) zu einem Silan der Formel (1) (Produkt U₁):

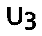

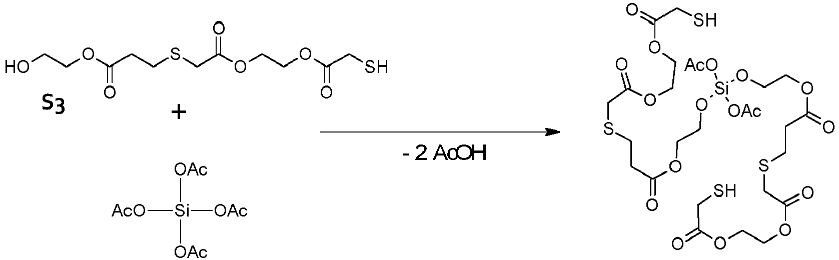

13,76 g (52,08 mmol, 1,0 Äquiv.) Siliciumtetraacetat wurden mit 34,00 g (104,17 mmol, 2,0 Äquiv.) S3 versetzt. Diese Reaktionsmischung wurde zunächst 1 min bei Raumtemperatur gerührt und daraufhin 15 min bei 15 mbar auf 80 °C erhitzt. Danach wurde der Druck für weitere 3 h auf 1 mbar reduziert. Das Reaktionsgemisch wurde 8 h im Ölpumpenvakuum von flüchtigen Bestandteilen befreit und mit Hilfe von Druckluft über einen Filter mit 15 µm Porengröße filtriert. Bei dem entstehenden Produktgemisch U3 sind durchschnittlich zwei Alkoxygruppen und zwei Acetoxygruppen an ein Siliciumatom gebunden. Ausbeute: 34,55 g (98 %).

### C. Hydrolyse + Kondensation - Herstellung der Harze H1, H2 bzw. H3:

Die Produktgemische U1, U2 bzw. U3 wurden im Anschluss jeweils bei 90 °C in mehreren Schritten hydrolysiert. Dazu wurde so viel Wasser zugegeben, dass auf jede fünfte übrige gebundene Acetoxy-Gruppe ein Wassermolekül (mindestens jedoch auf jede zwanzigste vor der Hydrolyse vorhandene Acetat-Gruppe ein Wassermolekül) kommt. Nach der Wasserzugabe wurde das Gemisch bei 90 °C 1 min gerührt und anschließend die flüchtigen Bestandteile im Ölpumpenvakuum entfernt. Der Hydrolysegrad der Si-OAc- und der Si-OAIk-Gruppen wurde jeweils mittels ¹H-NMR-Spektroskopie überprüft. Die Wasserzugabe wurde solange wiederholt bis im Wesentlichen alle Acetat-Gruppen aus dem Gemisch entfernt waren. Dabei wurde keine Spaltung der Alkoxy-Gruppen beobachtet. Bei den entstehenden Produkten H1, H2 bzw. H3 sind durchschnittlich zwei Alkoxygruppen an ein Siliciumatom gebunden. Die jeweiligen Produkte sind nachstehend als SH-Harze H1, H2 und H3 beschrieben.

### SH-Harz-Systeme:

- H1 (besitzt im Mittel zwei Alkoxy-Gruppen und zwei (OH/O...)-Gruppen pro Si-Atom) 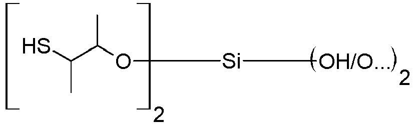
- H2 (besitzt im Mittel zwei Alkoxy-Gruppen und zwei (OH/O...)-Gruppen pro Si-Atom) 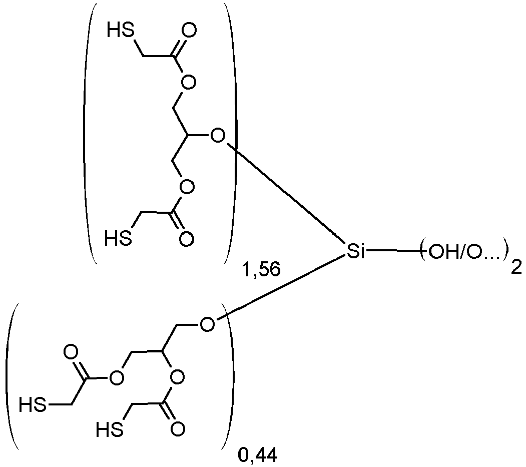
- H3 (besitzt im Mittel zwei Alkoxy-Gruppen und zwei (OH/O...)-Gruppen pro Si-Atom)

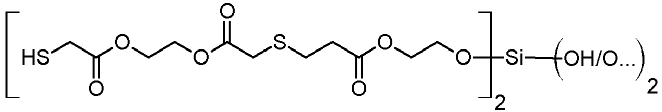

### D. Herstellung der Vernetzer (Verbindungen (2))

### D1.

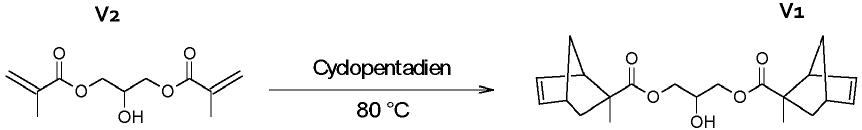

In 30,00 g (131,44 mmol) Glycerindimethacrylat (Mischung aus mono-, di- und trisubstituiertem Glycerin; im Mittel disubstituiert) wird 0,012 g (0,04 Gew.-%) Butylhydroxytoluol (BHT) gelöst. Die Reaktionsmischung wird anschließend bei 80 °C gerührt und langsam Cyclopentadien zugetropft. Das Cyclopentadien wird parallel durch die thermische Spaltung von Dicyclopentadien hergestellt und durch Destillation in die Reaktionsmischung überführt. Der Umsatz der Methacrylatgruppe wird durch ¹H-NMR-Spektroskopie überwacht. Nach Beendigung der Reaktion wird nicht umgesetztes Cyclopentadien und Dicyclopentadien unter reduziertem Druck aus dem dem Reaktionsgemisch entfernt. Ausbeute: 47,31 g (100 %). Wird, wie im vorgenannten Beispiel, eine Mischung verschiedener Isomere von Glycerindimethacrylat verwendet, entstehen entsprechende Isomermischungen von V₁. Diese lassen sich wie folgt darstellen:

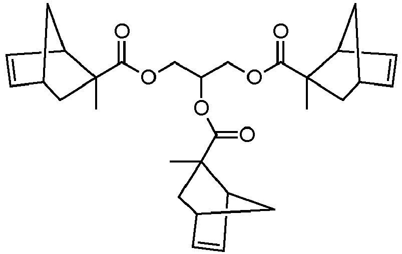

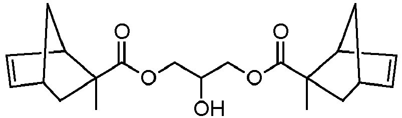

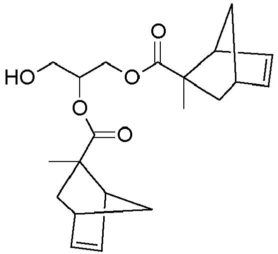

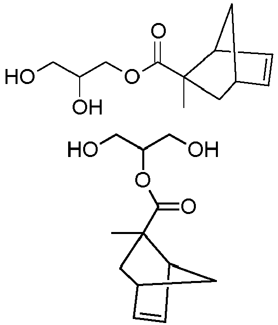

Im beispielhaften Fall betrugen die Anteile der Isomere des Glycerindimethacrylats (und dementsprechend auch die der Produkt-Isomere) (von oben nach unten gelesen) 18, 49, 16, 16 und 1 Mol-%. Selbstverständlich können auch andere Isomerenverhältnisse, oder -gemische oder reine Isomere eingesetzt werden.

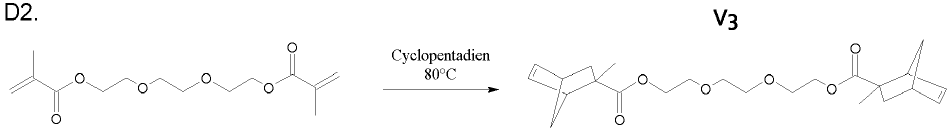

In 30,00 g (104,78 mmol) Triethylenglykoldimethacrylat wird 0,012 g (0,04 Gew.-%) Butylhydroxytoluol (BHT) gelöst. Die Reaktionsmischung wird anschließend bei 80 °C gerührt und langsam Cyclopentadien zugetropft. Das Cyclopentadien wird parallel durch die thermische Spaltung von Dicyclopentadien hergestellt und durch Destillation in die Reaktionsmischung überführt. Der Umsatz der Methacrylatgruppe wird durch ¹H-NMR-Spektroskopie überwacht. Nach Beendigung der Reaktion wird nicht umgesetztes Cyclopentadien und Dicyclopentadien unter reduziertem Druck aus dem Reaktionsgemisch entfernt. Ausbeute: 43,25 g (100 %).

D3. Weitere Beispiele für Vernetzer, die sich teilweise auf vergleichbare Weise wie V₃ herstellen lassen, sind: 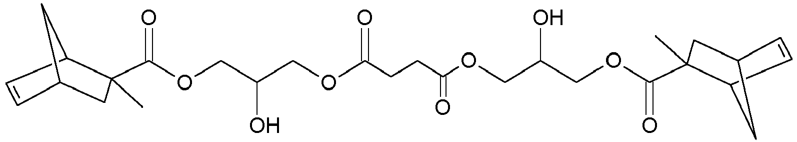 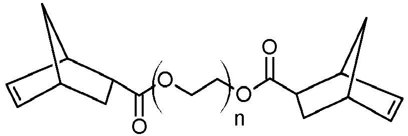 z.B. mit Mₙ = 575 g/mol d.h. im Schnitt n = 10 - 11, oder mit Mₙ = 700 g/mol).

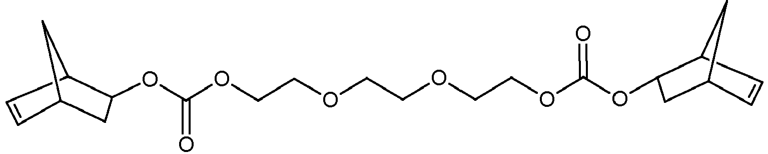

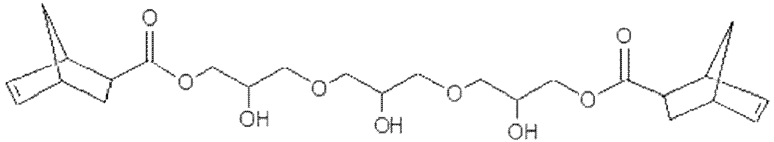

Weil die Norbornenylgruppen der vorstehenden Di-Norbornenyl-Verbindungen über Carbonsäuregruppen bzw. Carbonatgruppen an dem Polyglycol angebunden sind, entsteht bei der Hydrolyse jeweils eine wasserlösliche kohlenwasserstoffhaltige Kette. Solche Vernetzer sind deshalb erfindungsgemäß als Komponente (2) geeignet. Auch durch Hydroxygruppen (siehe die unterste der obenstehenden Vernetzer) lässt sich die Wasserlöslichkeit der Abbauprodukte erreichen.

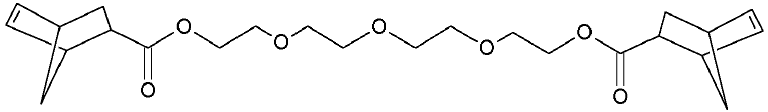

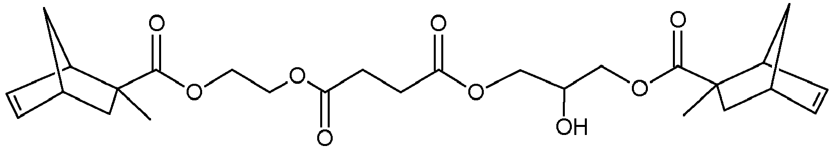

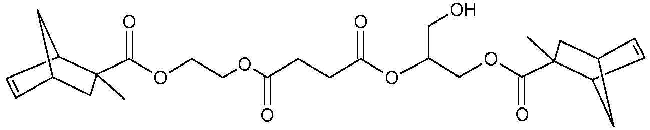

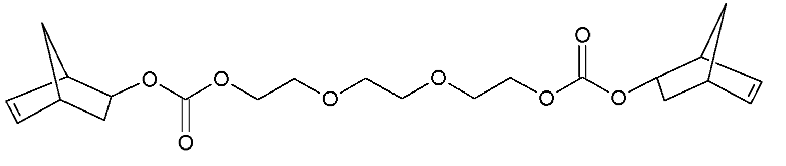

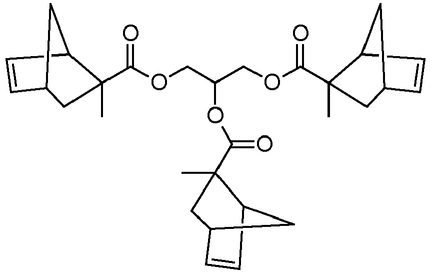

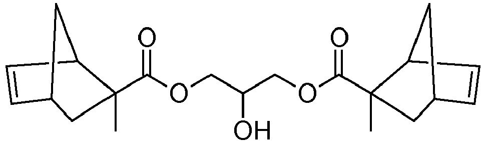

### D4. Beispiele für Vernetzer mit C=C-Doppelbindungen

### Allylether:

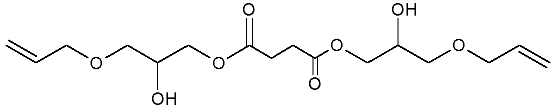

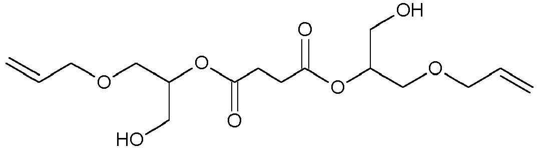

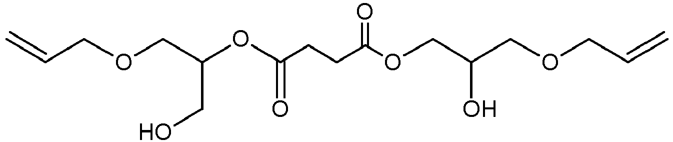

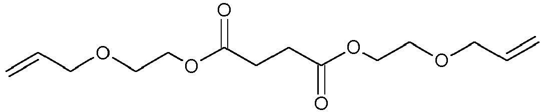

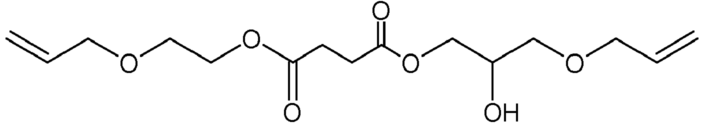

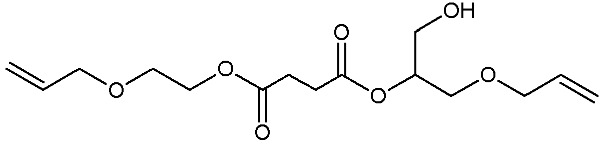

### Vinylester:

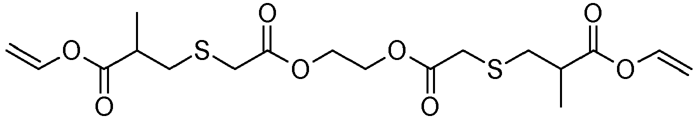

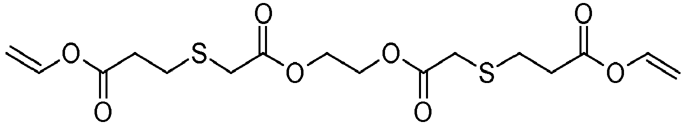

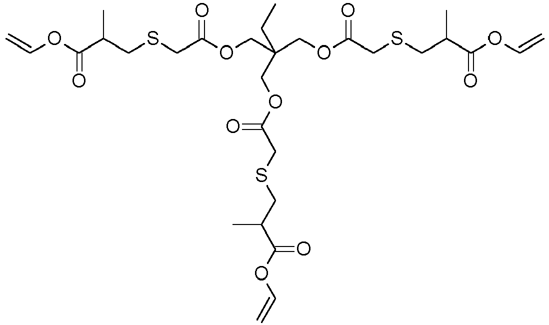

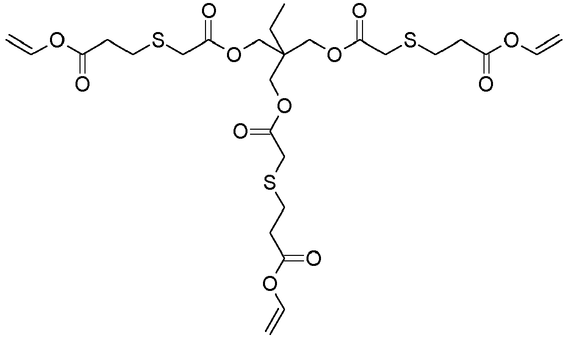

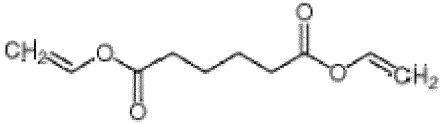

### Allylester:

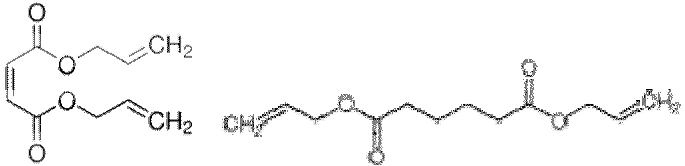

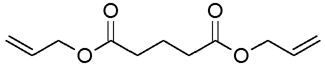

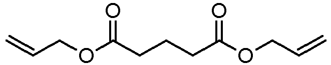

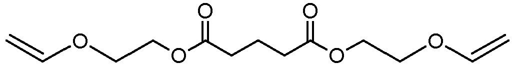

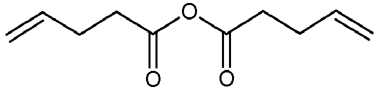

### Weitere Vernetzer:

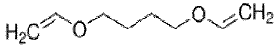

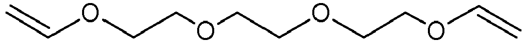

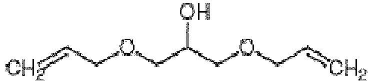

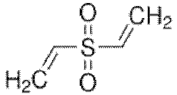

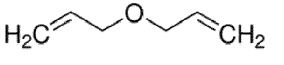

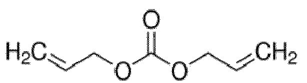

### E. Härtung der Harzsysteme/Probekörper-Herstellung und Charakterisierung

### E1. Mechanische Untersuchungen:

| | Zug-E-Modul | Zugfestigkeit |
|---|---|---|
| H2 + V2 | ~ 35 MPa | ~1,6 MPa |
| H1 + V1 | ~ 1900 MPa | ∼17 MPa |

Man erkennt, dass sich mit den erfindungsgemäßen Materialien eine spezifisch gesuchte Anpassung der mechanischen Werte an bestimmte Gewebe bewirken lässt. Da sich sowohl die anorganische als auch die organische Vernetzungsdichte einstellen lässt, kann der Fachmann durch geeignete Wahl innerhalb der Parameter, die die Erfindung beschreibt, genau die gewünschten Werte erzielen.

### E2. Degradationsversuche

### Probenherstellung:

In 4,77 g V2 wurden 0,04 g 1,5-Diazabicyclo[4.3.0]non-5-en gelöst. Nach der Zugabe von 5,50 g H2 wurden die Probenkörper (Durchmesser 10 mm; Höhe 2 mm) bei 100 °C für 1 h im Ofen ausgehärtet.

In 5,55 g V1 wurden 0,10 g Lucerin-TPO und 0,02 g Pyrogallol gelöst. Nach der Zugabe von 4,00 g H1 wurden die Probekörper (Durchmesser 10 mm; Höhe 2 mm) durch Belichtung (2 x 5 min) ausgehärtet.

### Massenverlust + Wasseraufnahme:

Die Probekörper wurden in destilliertem Wasser bzw. in Pufferlösungen (Phosphat-Puffer und Carbonat-Puffer) bei 37 °C gelagert. Das Degradationsmedium wurde alle 5-7 Tage erneuert. Der Gewichtsverlust der Probenwurde nach 16 Wochen bestimmt.

### Folgender Gewichtsverlust wurde beobachtet:

| **Probe** | **Degradationsmedium** | **Gewichtsverlust nach 16 Wochen** |
|---|---|---|
| **V2 + H2** | Dest. H₂O | 28 % |
| **V2 + H2** | Phosphat-Puffer | 20 % |
| **V2 + H2** | Carbonat-Puffer | 100 % |
| **V1 + H1** | Dest. H₂O | 5 % |
| **V1 + H1** | Phosphat-Puffer | 3 % |
| **V1 + H1** | Carbonat-Puffer | 6 % |

Die Degradationsrate ist stark vom pH-Wert des Degradationsmediums und der Netzwerkstruktur des verwendeten Materialsystems abhängig und kann darüber entsprechend eingestellt und den Erfordernissen angepasst werden.

### Folgende Wasseraufnahme wurde beobachtet:

| **Probe** | **Degradationsmedium** | **Wasseraufnahme nach 16 Wochen** |
|---|---|---|
| **V2 + H2** | Dest. H₂O | 50 Gew.-% bezogen auf Trockengewicht |
| **V2 + H2** | Phosphat-Puffer | 100 Gew.-% bezogen auf Trockengewicht |
| **V2 + H2** | Carbonat-Puffer | 54 Gew.-% bezogen auf Trockengewicht (nach 4 Wochen; nach 16 Wochen komplett abgebaut) |
| **V1 + H1** | Dest. H₂O | 10 Gew.-% bezogen auf Trockengewicht |
| **V1 + H1** | Phosphat-Puffer | 7 Gew.-% bezogen auf Trockengewicht |
| **V1 + H1** | Carbonat-Puffer | 14 Gew.-% bezogen auf Trockengewicht |

Die Wasseraufnahme korreliert mit obigem Massenverlust und den beschriebenen Abhängigkeiten.

Aus einem Vergleich der beiden vorstehenden Beispielen lässt sich ablesen, dass die Wasseraufnahme durch Wahl geeigneter Verbindungen/Kondensate (1) und (2) variiert werden kann. So führt der Ersatz von V2 durch V1 (Ersatz der Methacrylatgruppen gegen Norbornenylgruppen) zu einer stärkeren Hydrophobie des Produkts. Gleichzeitig wird bei Ersatz des Harzes H2 gegen H1 der Abstand der SH-Gruppen zu den Si-Atomen verringert und damit das Vernetzungspotential erhöht. Beide Effekte dürften zu der beobachteten Verringerung der Wasseraufnahme beitragen.

### →¹H-NMR-Untersuchungen:

V2 + H2: Die Degradationsmedien wurden mittels ¹H-NMR-Spektroskopie untersucht, um so mögliche Abbauprodukte zu identifizieren. Es konnte die Spaltung der Si-O-C-Bindung zwischen dem organischen und anorganischen Netzwerk nachgewiesen werden. Auch die hydrolytische Spaltung aller anderen Sollbruchstellen (in den aufgeführten Ausführungsbeispielen Ester-Gruppen) konnte durch den Nachweis von Glycerin in den Degradationsmedien bestätigt werden.

V1 + H1: Die Degradationsmedien wurden mittels ¹H-NMR-Spektroskopie untersucht, um so mögliche Abbauprodukte zu identifizieren. Es konnte die Spaltung der Si-O-C-Bindung zwischen dem organischen und anorganischen Netzwerk nachgewiesen werden.

### F. 3D-Druck mittels Digital-Light-Processing (DLP-Verfahren)

Die beschriebenen degradierbaren anorganisch vorvernetzten Silane z.B. H1, H2 und/oder H3 können mit den beschriebenen Vernetzern z.B. V1, V2 und/oder V3 durch die photoreaktiven Gruppen zusätzlich organisch vernetzt und damit ausgehärtet werden. Dies ermöglicht die Verarbeitung des beschriebenen Materials in einem 3D-Drucker, der mit auf dem DLP-Prinzip beruht. Es können individuelle Strukturen erzeugt werden.

### Anwendungsbeispiel 1:

In 16,12 g V3 werden 0,26 g Lucirin-TPO und 0,052 g Pyrogallol gelöst. Nach der Zugabe von 10,00 g H1 konnte das Material in einem 3D-Drucker (DLP-Verfahren) von Rapidshape S60-LED verarbeitet und die angestrebte Form erzeugt werden. Der so hergestellte Formkörper ist in Fig.1 dargestellt.

Das Beispiel wurde wiederholt, wobei 0,5 Gew.-% Titanoxid-Nanopartikel als Füllstoff zugesetzt wurden. Der so hergestellte poröse Formkörper (in Fig. 2 dargestellt) eignet sich z.B. als Knochenersatzmaterial.

### Anwendungsbeispiel 2 - 3D-gedrucktes Bauteil aus degradierbarem Hybridpolymer

### Verwendetes Materialsystem:

H1 + V3
+ 1 Gew.-% LUCIRINO TPO (Initiator)
+ 0,05 Gew.-% Pyrogallol
+ 1 Gew.-% TiO₂ Nanopartikeln

LUCIRINO TPO und Pyrogallol wurden in V3 gelöst, anschließend wurde H1 zugegeben und homogen vermischt. Danach wurden die TiO₂-Nanopartikel mit einem Speedmixer (DAC 150 FVZ, Hauschild Engineering, Hamm) bei 2000 rpm für 3 Minuten eingearbeitet.

### Verwendeter 3D-Drucker:

Rapidshape S60 LED (DLP-Prinzip)

### Verarbeitungsparameter beim Drucken:

Enbrennfaktor: 300 %
Einbrenngradient: 7 Schichten
Drückkraft: -50,0 mN/mm²
Trennkraft: 40,0 mN/mm²
Trennabstand: 500 µm
Energie: 1500,0 mJ/dm²

Das Materialsystem wurde in genanntem 3D-Drucker zu einem Gitterwürfel mit einer Kantenlänge von 1 cm und interkonnektierten Poren verarbeitet.

## Patentansprüche

1. Silan der Formel (1)
R¹ₐSiR₄₋ₐ (1)
wobei
die Gruppe R¹ oder jede der Gruppen R¹ unabhängig voneinander
- über ein Sauerstoffatom an das Silicium gebunden ist,
- eine geradkettige oder verzweigte kohlenwasserstoffhaltige Kette mit mehreren Strukturelementen aufweist, die jeweils nicht mehr als 8 aufeinander folgende Kohlenstoffatome besitzen, wobei die kohlenwasserstoffhaltige Kette aus Alkyleneinheiten aufgebaut ist, deren Glieder unsubstituiert oder substituiert sind, wobei die Substituenten unter Hydroxy-, Carbonsäure-, Phosphat-, Phosphonsäure-, Phosphorsäureester-, tertiären Aminogruppen und Aminosäuregruppen ausgewählt sind, und die kohlenwasserstoffhaltige Kette innerhalb der einzelnen Elemente weiterhin durch Sauerstoffatome, Schwefelatome oder Sulfonylgruppen unterbrochen sein kann, wobei jedes der Strukturelemente der kohlenwasserstoffhaltigen Kette durch eine Estergruppe als spaltbare Gruppe vom nächsten Strukturelement getrennt ist,
- mindestens eine Thiol- oder eine primäre oder sekundäre Aminogruppe aufweist,
die Gruppe R oder jede der Gruppen R unabhängig voneinander eine hydrolytisch kondensierbare Gruppe ist, die unter Alkyl-COO-, Alkyl-O- und HO- ausgewählt ist, und
a 1, 2, 3 oder 4 ist.

2. Silan der Formel (1) nach Anspruch 1, worin mindestens eines der Strukturelemente des Kohlenwasserstoffgerüstes des Restes R¹ maximal sechs aufeinander folgende Kohlenstoffatome besitzt.

3. Organisch modifiziertes Kieselsäurepolykondensat, umfassend ein hydrolytisches Kondensationsprodukt eines Silans gemäß Anspruch 1 oder 2 oder einer Mischung mehrerer dieser Silane.

4. Organisch modifiziertes, polymerisiertes Kieselsäurepolykondensat, herstellbar durch Umsetzen des Silans der Formel (1) nach Anspruch 1 oder 2 und/oder eines organisch modifizierten Kieselsäurepolykondensates nach Anspruch 3
mit einer Verbindung R²(X)_{b} (2),
worin
die Gruppe R² ein b-fach bindiges Kohlenwasserstoffgerüst mit einer geradkettigen oder verzweigten, kohlenwasserstoffhaltigen Kette mit einem oder mehreren Strukturelementen aufweist, die jeweils nicht mehr als 8 aufeinander folgende Kohlenstoffatome besitzen, wobei jedes von mehreren Strukturelementen der kohlenwasserstoffhaltigen Kette durch eine spaltbare Gruppe vom nächsten Strukturelement getrennt ist,
wobei die spaltbaren Gruppen ausgewählt sind unter Ester-, Anhydrid-, Amid-, Carbonat-, Carbamat-, Ketal-, Acetal-, Disulfid-, Imin-, Hydrazon- und Oxim-Gruppen,
X eine Gruppe ist, die bei der genannten Umsetzung mit der mindestens einen Thiol- oder primären oder sekundären Aminogruppe des Restes R¹ des Silans der Formel (1) eine Additionsreaktion eingeht, und
b 2, 3, 4 oder größer 4 ist.

5. Organisch modifiziertes, polymerisiertes Kieselsäurepolykondensat nach Anspruch 4, bei dem es sich um das Produkt der Umsetzung des Silans der Formel (1) nach Anspruch 1 oder 2 mit der genannten Verbindung (2) handelt, wobei dieses Produkt nach der genannten Umsetzung einer hydrolytischen Kondensation unterworfen wurde.

6. Organisch modifiziertes, polymerisiertes Kieselsäurepolykondensat nach Anspruch 4 oder 5, worin das Strukturelement oder mindestens eines der Strukturelemente der kohlenwasserstoffhaltigen Kette des Restes R² eines oder beide der folgenden Merkmale (i) und (ii) aufweist:
(i) er ist aus Alkyleneinheiten aufgebaut, wobei die Alkyleneinheiten unsubstituiert sind oder mindestens eine der Alkyleneinheiten mit einer oder mehreren Gruppen substituiert ist, ausgewählt unter Hydroxy-, Carbonsäure-, Phosphat-, Phosphonsäure-, Phosphorsäureester- und tertiären Amino- und Aminosäuregruppen;
(ii) er ist durch ein oder mehrere Sauerstoffatome und/oder Schwefelatome und/oder Sulfonylgruppen unterbrochen.

7. Organisch modifiziertes, polymerisiertes Kieselsäurepolykondensat nach Anspruch 6, worin mindestens eines der Strukturelemente der kohlenwasserstoffhaltigen Kette des Restes R² (i) mindestens eine der substituierten Alkyleneinheiten aufweist und (ii) durch ein oder mehrere Sauerstoffatome und/oder Schwefelatome und/oder Sulfonylgruppen unterbrochen ist.

8. Organisch modifiziertes, polymerisiertes Kieselsäurepolykondensat nach einem der Ansprüche 4 bis 7, worin die Gruppe X der Verbindung (2) mindestens eine organisch polymerisierbare C=C-Doppelbindung als Bestandteil einer Gruppe aufweist, die unter einer Acrylat-, oder Methacrylat- oder Norbornenylgruppe, oder einen Epoxyring oder eine Spirogruppe ausgewählt ist.

9. Organisch modifiziertes, polymerisiertes Kieselsäurepolykondensat nach einem der Ansprüche 4 bis 8, worin mindestens eines der Strukturelemente der kohlenwasserstoffhaltigen Kette des Restes R² beide der folgenden Merkmale (i) und (ii) aufweist:
(i) er ist aus Alkyleneinheiten aufgebaut, wobei mindestens eine der Alkyleneinheiten mit einer oder mehreren Gruppen substituiert ist, ausgewählt unter Hydroxy-, Carbonsäure-, Phosphat-, Phosphonsäure-, Phosphorsäureester- und tertiären Amino- und Aminosäuregruppen;
(ii) er ist durch ein oder mehrere Sauerstoffatome und/oder Schwefelatome und/oder Sulfonylgruppen unterbrochen.

10. Organisch modifiziertes, polymerisiertes Kieselsäurepolykondensat nach einem der Ansprüche 4 bis 9, worin die Verbindung R²(X)_{b} ein Molekulargewicht von höchstens 3000 g/mol aufweist.

11. Organisch modifiziertes, polymerisiertes Kieselsäurepolykondensat nach einem der Ansprüche 4 bis 10, wobei das Verhältnis der Gruppen X der Verbindung (2) zu der Summe der Thiol- und Aminogruppen in den Silanen (1) und Kondensationsprodukten davon 0,1 bis unter 1,0 ist.

12. Organisch modifiziertes, polymerisiertes Kieselsäurepolykondensat nach einem der Ansprüche 4 bis 11 in Gestalt eines Formkörpers.

13. Verwendung des Formkörpers nach Anspruch 12 als biologisch oder medizinisch verwendbarer Gegenstand oder als Gegenstand zur Zell- oder Gewebestabilisierung oder zur Zell- oder Gewebezüchtung.

## Claims

1. A silane of the formula (1)
R¹ₐSiR₄₋ₐ (1),
wherein
the group R¹ or each of the groups R¹ independently
- is bound to the silicon via an oxygen atom,
- has a straight or branched hydrocarbonaceous chain containing a plurality of chain sections each having not more than 8 consecutive carbon atoms, wherein the hydrocarbonaceous chain is composed of alkylene units the members of which are unsubstituted or substituted, wherein the substituents are selected from hydroxy, carboxylic acid, phosphate, phosphonic acid ester, phosphoric acid ester, tertiary amino and amino acid groups, and the hydrocarbonaceous chain is further substituted within each element by oxygen atoms, sulphur atoms or sulphonyl groups, wherein each of the chain sections of the hydrocarbonaceous chain is separated from the next chain section by an ester group as a cleavable group,
- has at least one thiol or a primary or secondary amino group,
the group R or each of the groups R is independently a hydrolytically condensable group selected from alkyl-COO-, alkyl-O- and HO-, and
a is 1, 2, 3 or 4.

2. The silane of the formula (1) according to claim 1, in which at least one of the chain sections of the hydrocarbon skeleton of the radical R¹ has a maximum of six consecutive carbon atoms.

3. An organically modified silica polycondensate comprising a hydrolytic condensation product of a silane according to claim 1 or 2 or a mixture of a plurality of said silanes.

4. An organically modified, polymerized silicic acid polycondensate preparable by reacting the silane of the formula (1) according to claim 1 or 2 and/or an organically modified silicic acid polycondensate according to claim 3 with a compound R²(X)_{b} (2),
wherein
the group R² comprises a b-fold binding hydrocarbon backbone with a straight or branched hydrocarbonaceous chain having one or more chain sections each having not more than 8 consecutive carbon atoms, each of a plurality of chain sections of the hydrocarbonaceous chain being separated from the next chain section by a cleavable group,
wherein the cleavable groups are selected from ester, anhydride, amide, carbonate, carbamate, ketal, acetal, disulfide, imine, hydrazone and oxime groups,
X is a group which, in the said reaction, undergoes an addition reaction with the at least one thiol or primary or secondary amino group of the radical R¹ of the silane of formula (1), and
b is 2, 3, 4 or greater 4.

5. The organically modified polymerized silica polycondensate according to claim 4, which is the product of the reaction of the silane of formula (1) according to claim 1 or 2 with said compound (2), said product having been subjected to hydrolytic condensation after said reaction.

6. The organically modified polymerized silica polycondensate according to claim 4 or 5, wherein the chain section or at least one of the chain sections of the hydrocarbonaceous chain of the radical R² has one or both of the following features (i) and (ii):
(i) it is composed of alkylene units, the alkylene units being unsubstituted or at least one of the alkylene units being substituted with one or more groups selected from hydroxy, carboxylic acid, phosphate, phosphonic acid, phosphoric acid ester and tertiary amino and amino acid groups
(ii) it is interrupted by one or more oxygen atoms and/or sulphur atoms and/or sulphonyl groups.

7. The organically modified, polymerised silicic acid polycondensate according to claim 6, wherein at least one of the chain sections of the hydrocarbonaceous chain of the radical R² (i) has at least one of the substituted alkylene units and (ii) is interrupted by one or more oxygen atoms and/or sulphur atoms and/or sulphonyl groups.

8. The organically modified polymerized silica polycondensate according to any one of claims 4 to 7, wherein the group X of compound (2) has at least one organically polymerizable C=C double bond as a constituent of a group selected from an acrylate, or methacrylate or norbornenyl group, or an epoxy ring or spiro group.

9. The organically modified polymerized silica polycondensate according to any one of claims 4 to 8, wherein at least one of the chain sections of the hydrocarbonaceous chain of the radical R² has both of the following features (i) and (ii):
(i) it is composed of alkylene units, at least one of the alkylene units being substituted with one or more groups selected from hydroxy, carboxylic acid, phosphate, phosphonic acid, phosphoric acid ester and tertiary amino and amino acid groups
(ii) it is interrupted by one or more oxygen atoms and/or sulphur atoms and/or sulphonyl groups.

10. The organically modified polymerized silica polycondensate according to any one of claims 4 to 9, wherein the compound R²(X)_{b} has a molecular weight of at most 3000 g/mol.

11. The organically modified polymerized silica polycondensate according to any one of claims 4 to 10, wherein the ratio of the groups X of compound (2) to the sum of the thiol and amino groups in the silanes (1) and condensation products thereof is 0.1 to below 1.0.

12. The organically modified polymerized silica polycondensate according to any one of claims 4 to 11 in the form of a shaped body.

13. The use of the shaped body according to claim 12 as a biologically or medically useful object or as an object for cell or tissue stabilization or for cell or tissue cultivation.

## Revendications

1. Silane de formule (1)
R¹ₐSiR₄₋ₐ (1)
dans lequel
le groupe R¹ ou chacun des groupes R¹, indépendamment les uns des autres,
- est lié au silicium par le biais d'un atome d'oxygène,
- présente une chaîne contenant des hydrocarbures à chaîne linéaire ou ramifiée avec plusieurs éléments de structure qui ne comportent respectivement pas plus de 8 atomes atomes de carbone successifs, dans lequel la chaîne contenant des hydrocarbures est construite à partir d'unités alkyle dont les maillons sont substitués ou non-substitués,
dans lequel les substituants sont choisis parmi des groupes hydroxyle, d'acide carboxylique, de phosphate, d'acide phosphoreux, d'ester d'acide phosphorique, des groupes amino et groupes d'acides aminés tertiaires, et la chaîne contenant des hydrocarbures à l'intérieur des éléments individuels peut en outre être interrompue par des atomes d'oxygène, des atomes de soufre ou des groupes sulfonyles, dans lequel chacun des éléments de structure de la chaîne contenant des hydrocarbures est séparé de l'élément de structure suivant par un groupe ester sous la forme d'un groupe fissile,
- présente au moins un groupe thiol ou un groupe amino primaire ou secondaire,
le groupe R ou chacun des groupes R est indépendamment les uns des autres un groupe condensable par hydrolyse qui est choisi parmi alkyl-COO-, alkyl-O- et HO-, et
a est égal à 1, 2, 3 ou 4.

2. Silane de formule (1) selon la revendication 1, dans lequel au moins un des éléments de structure du squelette hydrocarboné du radical R¹ comporte au maximum six atomes de carbone successifs.

3. Polycondensat d'acide silicique organiquement modifié, comprenant un produit de condensation par hydrolyse d'un silane selon la revendication 1 ou 2 ou d'un mélange de plusieurs de ces silanes.

4. Polycondensat d'acide silicique polymérisé organiquement modifié, qui peut être obtenu par conversion du silane de formule (1) selon la revendication 1 ou 2 et/ou d'un polycondensat d'acide silicique organiquement modifié selon la revendication 3, avec une liaison R²(X)_{b} (2),
où
le groupe R² présente un squelette hydrocarboné de liaison b avec une chaîne contenant des hydrocarbures à chaîne linéaire ou ramifiée avec un ou plusieurs éléments de structure qui ne comportent respectivement pas plus de 8 atomes de carbone successifs, dans lequel chacun des plusieurs éléments de structure de la chaîne contenant des hydrocarbures est séparé de l'élément de structure suivant par un groupe fissile,
dans lequel les groupes fissiles sont choisis parmi des groupes ester, anhydride, amide, carbonate, carbamate, cétal, acétal, disulfure, imine, hydrazone et oxime,
X est un groupe qui réalise une réaction par addition lors de ladite conversion avec l'au moins un groupe thiol ou groupe amino primaire ou secondaire du radical R¹ du silane de formule (1), et b est égal à 2, 3, 4 ou supérieur à 4.

5. Polycondensat d'acide silicique polymérisé organiquement modifié selon la revendication 4, dans lequel il s'agit du produit de la conversion du silane de formule (1) (1) selon la revendication 1 ou 2 avec ladite liaison (2), dans lequel ce produit selon ladite conversion a été soumis à une condensation par hydrolyse.

6. Polycondensat d'acide silicique polymérisé organiquement modifié selon la revendication 4 ou 5, où l'élément de structure ou au moins un des éléments de structure de la chaîne contenant des hydrocarbures du radical R² présente une des caractéristiques suivantes (i) et (ii) ou les deux caractéristiques :
(i) il est construit à partir d'unités alkyle, dans lequel les unités alkyle sont non-substituées ou au moins une des unités alkyle est substituée avec un ou plusieurs groupes choisis parmi des groupes hydroxyle, d'acide carboxylique, de phosphate, d'acide phosphoreux, d'ester d'acide phosphorique et des groupes amino ou d'acides aminés tertiaires ;
(ii) il est interrompu par un ou plusieurs atomes d'oxygène et/ou atomes de soufre et/ou groupes sulfonyles.

7. Polycondensat d'acide silicique polymérisé organiquement modifié selon la revendication 6, où au moins un des éléments de structure de la chaîne contenant des hydrocarbures du radical R² (i) présente au moins une des unités alkyle substituées et (ii) est interrompu par un ou plusieurs atomes d'oxygène et/ou atomes de soufre et/ou groupes sulfonyles.

8. Polycondensat d'acide silicique polymérisé organiquement modifié selon une des revendications 4 à 7, où le groupe X de la liaison (2) présente au moins une double liaison C=C organiquement polymérisable comme composant d'un groupe qui est choisi parmi un groupe d'acrylates, de méthacrylates ou norbornyle, ou un cycle Epoxy ou un groupe Spiro.

9. Polycondensat d'acide silicique polymérisé organiquement modifié selon une des revendications 4 à 8, où au moins un des éléments de structure de la chaîne contenant des hydrocarbures du radical R² présente les deux caractéristiques suivantes (i) et (ii) :
(i) il est construit à partir d'unités alkyle, dans lequel au moins une des unités alkyle est substituée avec un ou plusieurs groupes choisis parmi des groupes hydroxyle, d'acide carboxylique, de phosphate, d'acide phosphoreux, d'ester d'acide phosphorique et des groupes amino ou d'acides aminés tertiaires ;
(ii) il est interrompu par un ou plusieurs atomes d'oxygène et/ou atomes de soufre et/ou groupes sulfonyles.

10. Polycondensat d'acide silicique polymérisé organiquement modifié selon une des revendications 4 à 9, où la liaison R²(X)_{b} présente un poids moléculaire au maximum de 3 000 g/mol.

11. Polycondensat d'acide silicique polymérisé organiquement modifié selon une des revendications 4 à 10, dans lequel le rapport des groupes X de la liaison (2) sur la somme des groupes thiol et amino dans les silanes (1) et des produits de condensation de ceux-ci est compris de 0,1 jusqu'à moins de 1,0.

12. Polycondensat d'acide silicique polymérisé organiquement modifié selon une des revendications 4 à 11, sous la forme d'un corps moulé.

13. Utilisation du corps moulé selon la revendication 12 sous la forme d'un objet qui peut être utilisé en biologie ou en médecine ou sous la forme d'un objet pour la stabilisation cellulaire ou tissulaire ou pour la culture cellulaire ou tissulaire.
